(19) Europäisches Patentamt
European Patent Office
Office européen des brevets

(11) **EP 3 912 956 A1**

(12) **EUROPEAN PATENT APPLICATION**

(43) Date of publication:
**24.11.2021 Bulletin 2021/47**

(21) Application number: **20175567.5**

(22) Date of filing: **19.05.2020**

(51) Int Cl.:
**B82Y 30/00** (2011.01)     **C08J 3/22** (2006.01)
**C08K 5/098** (2006.01)     **C08L 23/06** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Total Research & Technology Feluy**
**7181 Seneffe (BE)**

(72) Inventors:
• **ROUSSEAUX, Dimitri**
**1400 NIVELLES (BE)**

• **SCANDINO, Eddi**
**7190 ECAUSSINNES (BE)**
• **LHOST, Olivier**
**7021 HAVRE (BE)**
• **MARCQ, François**
**6500 Renlies (BE)**

(74) Representative: **Garcia Martin, Margarita**
**Total Research & Technology Feluy**
**Patent Department**
**Zone Industrielle Feluy C**
**7181 Seneffe (BE)**

(54) **POLYETHYLENE-BASED MASTERBATCHES COMPRISING CARBON NANOTUBES AND METALLIC STEARATE FOR PREPARING CONDUCTIVE ARTICLES, PROCESS AND CONDUCTIVE ARTICLES PRODUCED THEREFROM**

(57)     The disclosure relates to a masterbatch for use in a process for preparing a composite material, the masterbatch comprising a blend of from 71.0 to 95.0 wt.% of a first polyethylene resin based on the total weight of said masterbatch, wherein the first polyethylene resin has a melt flow index MI2 ranging from 1 to 500 g/10 min according to ISO 1133 (190 °C; 2.16 kg); and at least 5.0 wt.% of carbon particles selected from nanographene, carbon nanotubes or any combination thereof; wherein the masterbatch further comprises from 0.1 to 4.5 wt.% of an additive composition, and wherein comprises at least 80 wt.% of one or more metallic stearates based on the total weight of the additive composition. The disclosure also relates to the conductive articles produced from said masterbatches and of the processes of production thereof.

EP 3 912 956 A1

**Description**

**Technical field**

The present disclosure relates to masterbatches for preparing conductive articles comprising carbon nanotubes and based on polyethylene. The present disclosure also relates to a process for preparing said masterbatches and to the conductive articles prepared from these masterbatches.

**Technical background**

Polymer materials, such as polyethylene (PE), are frequently used for preparing pipes suitable for various purposes, such as fluid transport, such as transport of liquid or gas, e.g. water or natural gas, during which the fluid can be pressurized.

PE pipes are generally manufactured by extrusion, blow-moulding or injection moulding. The properties of such conventional PE pipes are sufficient for many purposes, although enhanced properties may be desired, for instance in applications requiring high-pressure resistance, *i.e.* pipes that are subjected to internal fluid pressure for a long and/or a short period.

According to ISO 9080, PE pipes are classified by their minimum required strength, i.e. their capability to withstand different hydrostatic (hoop) stress during 50 years at 20 °C without fracturing. Thereby, pipes withstanding hoop stress of 8.0 MPa (minimum required strength MRS8.0) are classified as PE80 pipes, and pipes withstanding hoop stress of 10.0 MPa (MRS10.0) are classified as PE100 pipes.

Moreover, the transported fluid may have various temperatures, thus according to ISO 24033, polyethylene of raised temperature resistance (PE-RT) pipes of type II shall not give any brittle failures indicating the presence of a knee at any temperature up to 110 °C within one year.

PE80 pipes, PE100 pipes and PE-RT pipes are usually prepared from specific polyethylene grades, such as medium density polyethylene and high-density polyethylene. PE80 pipes and PE100 pipes are usually produced from a polyethylene resin showing a high viscosity and having, therefore, a melt flow index MI5 of at most 1.5 g/10 min as determined according to ISO 1133 at 190 °C under a load of 5 kg. PE-RT pipes are usually produced from a polyethylene resin having a melt flow index MI2 of at most 5.0 g/10 min as determined according to ISO 1133 at 190 °C under a load of 2.16 kg.

If conductive pipes are required, such as for mining application, the polyethylene can be then blended with carbon particles such as carbon black. It has been experienced that, to achieve the desired electrical properties on the surface of the pipes, the composite material comprising the polyethylene and the carbon particles should contain at least 15 wt.% of carbon particles based on the total weight of the composite material. Unfortunately, the carbon particles content directly influences the mechanical properties obtained on the pipe such as the impact failure properties. As a general rule, when polyethylene is blended with a filler (such as carbon black) the higher is the filler content, the worse are the impact properties.

Similar problems arise with containers, such as car fuel tanks (CFT), or with geomembranes when produced from polyethylene. PE-CFT are usually prepared from polyethylene, such as medium density polyethylene and high-density polyethylene, having a high viscosity and therefore a high load melt flow index HLMI of at most 10 g/10 min as determined according to ISO 1133 at 190 °C under a load of 21.6 kg. The addition of carbon particles to achieve targeted electrical properties results in a loss of mechanical properties such as a loss of the impact properties.

Thus, there is a need for a solution to achieve good electrical properties (such as good surface resistivity) in conductive articles, such as pipes, geomembranes, containers, such as car fuel tanks, electrical packaging, thermoformed articles, heating panels or films while keeping at the same time good mechanical properties. Thus, there is a need for a solution to achieve good electrical properties (such as good surface resistivity) in conductive articles, such as pipes, geomembranes, containers, such as car fuel tanks, electrical packaging, thermoformed articles, heating panels or films while keeping at the same time good mechanical properties such as good impact properties.

It is known to use masterbatches to achieve better dispersion of the carbon particles in the final composite material. Masterbatches are produced industrially and it could be interesting to produce masterbatches usable in different applications, such as for pipes, wherein achievement of electrical properties on the final product is prominent, and for films, wherein the good dispersion of the carbon particles is necessary. Thus, there is a need to provide masterbatches suitable for the production of conductive articles for various application, going from films to mining pipes.

**Summary**

It is, therefore, an object of the present disclosure to provide masterbatches of polyethylene and carbon particles to produce conductive articles wherein the masterbatches allow achieving good dispersion of carbon particles as well as good electrical properties with a lower content of carbon particles as compared to a similar article made without the use of said masterbatches.

According to a first aspect, the disclosure relates to a masterbatch for use in a process for preparing a conductive article, the masterbatch comprising a blend of:

- from 71.0 to 95.0 wt.% of a first polyethylene resin based on the total weight of said masterbatch, wherein the first polyethylene resin has a melt flow index MI2 ranging from 1 to 500 g/10 min as determined according to ISO 1133 at 190 °C under a load of 2.16 kg; preferably ranging from 1 to 250 g/10 min; and
- at least 5.0 wt.% of carbon particles based on the total weight of said masterbatch as determined according to ISO 11358 selected from nanographene, carbon nanotubes or any combination thereof;

wherein the masterbatch further comprises from 0.1 to 4.5 wt.% of an additive composition, wherein the additive composition comprises at least 80 wt.% of one or more metallic stearates based on the total weight of the additive composition.

Surprisingly, it has been found by the inventors that the presence of a metallic stearate within a masterbatch achieve a better dispersion of the carbon particles than other additive compositions, such as an additive composition comprising behenamide, waxes, or polyethylene oxide. It is, therefore, possible to achieve good electrical properties as well as low content of agglomerates even when blended with viscous polyethylene to form a composite material, such as polyethylene having an MI2 of less than 5.0 g/10 min determined according to ISO 1133 at 190 °C under a load of 2.16 kg, preferably of less than 1.00 g/10 min and more preferably less than 0.45 g/10 min.

Also, the masterbatch was found to be cleaner than masterbatches produced with other additives, allowing the production of films, as the number of defects observed was lowered. At the same time, it was possible to keep good electrical properties on the articles produced even with a lower content of carbon particles.

Preferably, one or more of the following embodiments can be used to define the additive composition:

- The one or more metallic stearates are selected from salts comprising stearate and a metal, said metal is selected from alkali metals, alkaline earth metals, transition metals, post-transition metals and metalloids, such as zinc, calcium, magnesium, sodium, potassium, aluminum, titanium, vanadium, chromium, manganese, iron, cobalt, nickel, copper, gallium, zirconium, silver, cadmium, indium, tin, antimony and the like.
- The content of the one or more metallic stearates in the additive composition is at least 85 wt.% based on the total weight of said additive composition, preferably at least 90 wt.%. Preferably, the additive composition comprises 100 wt.% of metallic stearate based on the total weight of said additive composition.

With preference one or more of the following embodiments can be used to define the masterbatch:

- The masterbatch has a high load melt flow index HLMI of at least 1 g/10 min and of at most 500 g/10 min as determined according to ISO 1133 at 190 °C under a load of 21.6 kg; preferably from of at least 3 g/10 min and at most 200 g/10 min; more preferably of at least 5 g/10 min and at most 100 g/10 min.
- The carbon particles are carbon nanotubes, with preference the masterbatch comprises from 5.0 wt.% to 25.0 wt.% of carbon nanotubes based on the total weight of said masterbatch as determined according to ISO 11358; preferably from 6.0 wt.% to 20.0 wt.%; more preferably from 7.0 wt.% to 15.0 wt.%.
- At least 80 wt.% of the carbon nanotubes have an average length of 1.2 $\mu$m or more; preferably at least 90 wt.%; more preferably, all the carbon nanotubes have an average length of 1.2 $\mu$m or more.
- The masterbatch comprises at most 1.50 wt.% of the additive composition based on the total weight of said masterbatch, preferably at most 1.00 wt.%, more preferably at most 0.50 wt.%, even more preferably at most 0.30 wt.% and most preferably at most 0.25 wt.%.
- The masterbatch comprises at least 0.05 wt.% of the additive composition based on the total weight of said masterbatch, preferably at least 0.10 wt.%, more preferably at least 0.15 wt.%, and even more preferably at least 0.20 wt. %.

With preference one or more of the following embodiments can be used to define the first polyethylene resin in the masterbatch:

- The first polyethylene resin has a melt flow index MI2 of at most 250 g/10 min or at most 150 g/10 min as determined according to ISO 1133 at 190 °C under a load of 2.16 kg, preferably at most 100 g/10 min, more preferably at most 50 g/10 min, even more preferably at most 15 g/10 min, most preferably at most 14 g/ 10 min, or at most 12 g/10 min; even most preferably at most 10 g/10 min or at most 8 g/10 min.
- The first polyethylene resin has a melt flow index MI2 of at least 2 g/10 min as determined according to ISO 1133 at 190 °C under a load of 2.16 kg, preferably at least 3 g/10 min, more preferably at most 4 g/ 10 min and even more preferably at least 5 g/10 min.

- The first polyethylene resin has a density of at least 0.920 g/cm$^3$ and of at most 0.980 g/cm$^3$ as determined according to ISO 1183 at a temperature of 23 °C.
- The first polyethylene resin has a melting temperature Tm1 as measured according to ISO 3146of at most 130 °C, preferably of at most 125 °C.
- The first polyethylene resin is a single-site catalyst catalyzed resin. Preferably, the first polyethylene resin is a metallocene-catalyzed polyethylene resin.
- The first polyethylene resin has a molecular weight distribution Mw/Mn of at least 2 and of at most 7.

In an embodiment, the first polyethylene resin is selected from a virgin polyethylene resin, a polyethylene post-consumer resin and a blend of a virgin polyethylene resin and a polyethylene post-consumer resin.

For example, the first polyethylene resin:

- comprises from 10 to 99 wt.% of polyethylene post-consumer resin based on the total weight of the first polyethylene resin; for example, from 20 to 90 wt.%; for example, from 40 to 80 wt.%; for example, from 50 to 70 wt.%; and/or
- is or comprises a post-consumer resin; wherein the polyethylene post-consumer resin has an MI2 ranging from 1 to 500 g/10 min as determined according to ISO 1133-2011 at 230 °C under a load of 2.16 kg; for example, from 1 to 250 g/10 min; and/or
- is or comprises a post-consumer resin; wherein the polyethylene post-consumer resin is a blend of recycled polypropylene and recycled polyethylene, wherein the content of the recycled polypropylene is ranging from 2 to 15 wt.% relative to the total weight of the polyethylene post-consumer resin.

According to a second aspect, the disclosure relates to a process for the preparation of a masterbatch according to the first aspect, the process comprising the steps of:

i. providing at least 5 wt.% of carbon particles based on the total weight of said masterbatch as determined according to ISO 11358 selected from nanographene, carbon nanotubes or any combination thereof;

ii. providing from 71.0 to 95.0 wt.% of a first polyethylene resin based on the total weight of said masterbatch, wherein the first polyethylene resin has a melt flow index MI2 ranging from 1 to 500 g/10 min as determined according to ISO 1133 at 190 °C under a load of 2.16 kg, wherein the first polyethylene resin has a melting temperature Tm1 as measured according to ISO 3146; preferably ranging from 1 to 250 g/10 min.

iii. providing from 0.1 to 4.5 wt.% of an additive composition comprising at least 80 wt.% of one or more metallic stearates based on the total weight of said additive composition;

iv. blending said carbon particles, said additive composition and said first polyethylene resin by extrusion in an extruder comprising a transport zone and a melting zone maintained at a temperature comprised between Tm1 + 1 °C and Tm1 + 50 °C, preferably between Tm1 + 5°C and Tm1 + 30 °C; and

v. forming a masterbatch through a die.

According to a third aspect, the disclosure relates to the use of an additive composition in a process to produce a masterbatch according to the first aspect, wherein the masterbatch comprises at least 5 wt.% of carbon particles, and a first polyethylene resin having a melt flow index MI2 ranging from 1 to 500 g/10 min as determined according to ISO 1133 at 190 °C under a load of 2.16 kg; preferably ranging from 1 to 250 g/10 min, wherein the additive composition comprises at least 80 wt.% of one or more metallic stearates based on the total weight of said additive composition; and wherein the additive composition content is ranging from 0.1 to 4.5 wt.% based on the total weight of said masterbatch.

With preference, the first polyethylene resin has a melting temperature Tm1 as measured according to ISO 3146, and in that the process comprises a step of blending said carbon particles, said additive composition and said first polyethylene resin by extrusion in an extruder comprising a transport zone and a melting zone maintained at a temperature comprised between Tm1 + 1 °C and Tm1 + 50 °C, preferably between Tm1 + 5°C and Tm1 + 30 °C.

According to a fourth aspect, the disclosure relates to a conductive article made from a composite material comprising:

- from 50 to 99 wt.% of polyethylene blend based on the total weight of said composite material, wherein the polyethylene blend has a high load melt flow index HLMI of at least 1 g/10 min and at most 50 g/10 min as determined according to ISO 1133 at 190 °C under a load of 21.6 kg;
- from 0.2 to 10.0 wt.% of carbon particles based on the total weight of said conductive material as determined according to ISO 11358 selected from nanographene, carbon nanotubes or any combination thereof; preferably from 0.2 to 3.5 wt.%; and
- 0.01 to 0.15wt.% of an additive composition comprising at least 80 wt.% of one or more metallic stearates based on the total weight of said additive composition; preferably at least 90 wt.%;

and further wherein the composite material has a surface resistivity of at most 1 E+06 ohm/sq as determined by using a 2410 SourceMeter® apparatus and according to the method described, preferably less than 1 E+05 ohm/sq.

Surprisingly, it was found that the addition of the additive composition in the masterbatch allows the use of viscous polymer within the composite material. It is, therefore, possible to achieve a surface resistivity of less than 1 E+05 ohm/sq for example, on pipes with a CNT content as low as less than 3,5 wt.%. As the impact properties are directly influenced by the filler content, the disclosure provides conductive articles with an improved balance of electrical and mechanical properties. Moreover, as the content of carbon particles can be lowered, the disclosure results, for targeted electrical properties, in less expensive articles with better mechanical properties. Also, the composite material produced therefrom also shows fewer agglomerates.

With preference one or more of the following embodiments can be used to define the composite material:

- The polyethylene blend is the blend of a first polyethylene resin having a melt flow index MI2 ranging from 1 to 200 g/10 min as determined according to ISO 1133 at 190 °C under a load of 2.16 kg and of a second polyethylene resin having a melt flow index MI2 of less than 100 g/10 min as determined according to ISO 1133 at 190 °C under a load of 2.16 kg, with preference the first polyethylene resin is the resin originated from the masterbatch according to the first aspect and/ or the second polyethylene resin having a melt flow index MI2 of less than 10 g/10 min.
- The polyethylene blend is a blend of a first polyethylene resin and a second polyethylene resin and has a bimodal molecular weight distribution.
- The polyethylene blend is a blend of a first polyethylene resin and a second polyethylene resin, wherein the first polyethylene resin has a melt flow index MI2 ranging from 1 to 500 g/10 min as determined according to ISO 1133 at 190 °C under a load of 2.16 kg, preferably ranging from 1 to 250 g/10 min, more preferably ranging from 2 to 150 g/10 min.
- The polyethylene blend is a blend of a first polyethylene resin and a second polyethylene resin, wherein the second polyethylene resin has a high load melt flow index HLMI of at most 45 g/10 min as determined according to ISO 1133 at 190 °C under a load of 21.6 kg, preferably of at most 40 g/10 min, more preferably of at most 20 g/10 min, even more preferably of at most 18 g/10 min, and most preferably of at most 14 g/10 min.
- The second polyethylene resin has a density of at least 0.920 g/cm$^3$ and of at most 0.980 g/cm$^3$ as determined according to ISO 1183 at a temperature of 23 °C, preferably of at most 0.960 g/cm$^3$. The composite material comprises at least 0.2 wt.% of carbon nanotubes based on the total weight of said composite material as determined according to ISO11358, preferably at least 0.5 wt.%, more preferably at least 1.0 wt.%.
- The composite material comprises at most 3.0 wt.% of carbon nanotubes based on the total weight of said composite material as determined according to ISO11358, preferably at most 2.8 wt.%, and more preferably at most 2.5 wt.%.
- The composite material comprises at most 0.10 wt.% of the additive composition based on the total weight of the composite material, preferably at most 0.08 wt.%, more preferably at most 0.05 wt.%.

In an embodiment, the second polyethylene resin is selected from a virgin polyethylene resin, a polyethylene post-consumer resin and a blend of a virgin polyethylene resin and a polyethylene post-consumer resin.

For example, the second polyethylene resin:

- comprises from 10 to 99 wt.% of polyethylene post-consumer resin based on the total weight of the second polyethylene resin; for example, from 20 to 90 wt.%; for example, from 40 to 80 wt.%; for example, from 50 to 70 wt.%; and/or

- is or comprises a post-consumer resin; wherein the polyethylene post-consumer resin has an MI2 of less than 100 g/10 min as determined according to ISO 1133-2011 at 230 °C under a load of 2.16 kg; for example, less than 10 g/10 min; and/or

- is or comprises a post-consumer resin; wherein the polyethylene post-consumer resin is a blend of recycled polypropylene and recycled polyethylene, wherein the content of the recycled polypropylene is ranging from 2 to 15 wt.% relative to the total weight of the polyethylene post-consumer resin.

For example, the second polyethylene resin has a melt flow index MI2 that is selected according to the final conductive article to be produced. For example, the second polyethylene resin having a melt flow index MI2 of less than 10 g/10 min as determined according to ISO 1133 at 190 °C under a load of 2.16 kg, preferably of less than 0.45 g/10 min; or in the range of 0.7 to 1.5 g/10 min; or in the range of 0.7 to 2.5 g/10 min; or in the range of 0.7 to 4.0 g/10 min; or in the range of 6.0 to 9.0 g/10 min.

For example, the polyethylene blend is a blend of a first polyethylene resin and a second polyethylene resin, wherein the second polyethylene resin has a melt flow index MI2 of less than 1.00 g/10 min or less than 0.45 g/10 min as determined according to ISO 1133 at 190 °C under a load of 2.16 kg, preferably of less than 0.42 g/10 min, more preferably of less than 0.40 g/10 min and even more preferably of less than 0.35 g/10 min.

For example, the polyethylene blend is a blend of a first polyethylene resin and a second polyethylene resin, wherein the second polyethylene resin has a melt flow index MI2 in the range of 0.2 to 4.0 g/10 min; or in the range of 0.4 to 2.5 g/10 min; or in the range of 0.7 to 1.5 g/10 min.

For example, the polyethylene blend is a blend of a first polyethylene resin and a second polyethylene resin, wherein the second polyethylene resin has a melt flow index MI2 in the range of 6.0 to 9.0 g/10 min.

According to a fifth aspect, the disclosure provides a conductive article it is made from or comprises the composite material according to the fourth aspect.

For example, the conductive article is selected from pipes suitable for mining applications, geomembranes or containers (such as car fuel tanks), such articles having good mechanical properties or being conductive or at least dissipative, wherein the articles are produced from polyethylene and low content of carbon particles such as carbon nanotubes. The conductive article according to the disclosure can also be a film and show good electrical properties as well as low content of agglomerates.

For example, the conductive article is selected from pipes, geomembranes, containers, electrical packaging, thermoformed articles, heating panels or films; and/or the conductive article is produced by extrusion, thermoforming, blow moulding or injection moulding. The electrical packaging is protecting against electrostatic discharge (ESD).

For example, the conductive article is a pipe; with preference:

- The conductive article is a monolayered pipe made from the composite material.
- The conductive article is a multilayered pipe and at least one layer is made from the composite material.
- The conductive article is a pipe, and the second polyethylene resin has a high load melt flow index HLMI of at least 5 g/10 min as determined according to ISO 1133 at 190 °C under a load of 21.6 kg, preferably of at least 7 g/10 min.
- The conductive article is a pipe, and the second polyethylene resin has a high load melt flow index HLMI of at most 50 g/10 min as determined according to ISO 1133 at 190 °C under a load of 21.6 kg, preferably of at most 45 g/10 min, more preferably of at most 40 g/10 min.
- The conductive article is a pipe, and the second polyethylene resin has a melt flow index MI5 of at least 0.1 g/10 min as determined according to ISO 1133 at 190 °C under a load of 5 kg, preferably of at least 0.2 g/10 min.
- The conductive article is a pipe, and the second polyethylene resin has a melt flow index MI5 of at most 5.0 g/10 min as determined according to ISO 1133 at 190 °C under a load of 5 kg, preferably of at most 2.0 g/10 min, more preferably of at most 1.5 g/10 min, even more preferably of at most 1.0 g/10 min, most preferably of at most 0.9 g/10 min, and even most preferably of at most 0.7 g/10 min.
- The conductive article is a pipe, and the second polyethylene resin has a density of at least 0.930 g/cm$^3$ and at most 0.960 g/cm$^3$ as determined according to ISO 1183 at a temperature of 23 °C.

For example, the conductive article is a container; with preference:

- The conductive article is a monolayered container made from the composite material.
- The conductive article is a multilayered container and at least one layer is made from the composite material.
- The conductive article is a container, and the second polyethylene resin has a high load melt flow index HLMI of at least 5 g/10 min as determined according to ISO 1133 at 190 °C under a load of 21.6 kg, preferably of at least 6 g/10 min.
- The conductive article is a container, and the second polyethylene resin has a density of at least 0.930 g/cm$^3$ and at most 0.960 g/cm$^3$ as determined according to ISO 1183 at a temperature of 23 °C.

For example, the conductive article is a geomembrane; with preference:

- The geomembrane is made from the composite material.
- The conductive article is a geomembrane, and the second polyethylene resin has a high load melt flow index HLMI of at most 20 g/10 min as determined according to ISO 1133 at 190 °C under a load of 21.6 kg, preferably of at most 18 g/10 min, and more preferably of at most 15 g/10 min.
- the conductive article is a geomembrane, and the second polyethylene resin has a density of at least 0.920 g/cm$^3$ and of at most 0.945 g/cm$^3$ as determined according to ISO 1183 at a temperature of 23 °C.

For example, the conductive article is a film; with preference:

- The conductive article is a monolayered film made from the composite material.
- The conductive article is a multilayered film and at least one layer is made from the composite material.
- The conductive article is a film and has a total defect area of less than 3500 ppm as determined by an optical control system (OCS).

For example, the conductive article is an electrical heating panel, with preference:

- The electrical heating panel comprises at least one device selected from a plate, a sheet or a film, wherein said device has one or more layers wherein at least one layer is a heating layer, and the heating layer or at least one heating layer is made of the composite material; with preference wherein said heating layer or said at least one heating layer has a thickness ranging from 100 $\mu$m to 4.0 mm.

For example, the conductive article is an electronic packaging such as an electrical packaging protecting against electrostatic discharge (ESD).
For example, the conductive article is a thermoformed article
According to a sixth aspect, the disclosure provides a process to produce a conductive article as defined according to the fifht aspect, the conductive article being produced from a composite material wherein the process comprises the following steps:

(a) providing a masterbatch according to the first aspect;
(b) providing a second polyethylene resin having a melt flow index MI2 of less than 200 g/10 min as determined according to ISO 1133 at 190 °C under a load of 2.16 kg, preferably less than 100, more preferably of less than 50 g/10 min, even more preferably of less than 10 g/10 min, most preferably less than 5 g/10 min and even most preferably of less than 0.45 g/10 min; or in the range of 0.7 to 1.5 g/10 min; or in the range of 0.4 to 2.5 g/10 min; or in the range of 0.2 to 4.0 g/10 min; or in the range of 6.0 to 9.0 g/10 min;
(c) blending said masterbatch and said second polyethylene resin by extrusion in an extruder comprising a transport zone and a melting zone maintained at a temperature greater than 180 °C;
(d) forming an article by extrusion, thermoforming, blow moulding or injection moulding.

With preference, the conductive material is according to the fourth aspect.
In an embodiment, the step d) is forming an article by extrusion, thermoforming or blow moulding.
With preference, in all embodiments, step c) and step d) are performed together in a single extrusion apparatus or in a single injection moulding apparatus. Thus, the different components of the composite material are dry blended together and directly provided to the extrusion apparatus or to the injection moulding apparatus. The different components of the composite material are not melt blended and not chopped into pellets before the shaping step (by extrusion or by injection) to form a pipe, a geomembrane, an electrical packaging, the sheet of a thermoformed article, a heating panel or a container. The electrical packaging is protecting against electrostatic discharge (ESD).

**Detailed description**

For the disclosure the following definitions are given:
As used herein, a "polymer" is a polymeric compound prepared by polymerizing monomers, whether of the same or a different type. The generic term polymer thus embraces the term homopolymer, usually employed to refer to polymers prepared from only one type of monomer, and the terms copolymer and interpolymer as defined below.
As used herein, a "copolymer", "interpolymer" and like terms mean a polymer prepared by the polymerization of at least two different types of monomers. These generic terms include polymers prepared from two or more different types of monomers, *e.g.* terpolymers, tetrapolymers, etc.
As used herein, "blend", "polymer blend" and like terms refer to a composition of two or more compounds, for example, two or more polymers or one polymer with at least one other compound.
As used herein, the term "melt blending" involves the use of shear force, extensional force, compressive force, ultrasonic energy, electromagnetic energy, thermal energy or combinations comprising at least one of the foregoing forces or forms of energy and is conducted in processing equipment wherein the aforementioned forces are exerted by a single-screw, multiple screws, intermeshing co-rotating or counter-rotating screws, non-intermeshing co-rotating or counter-rotating screws, reciprocating screws, screws with pins, barrels with pins, rolls, rams, helical rotors, or combinations comprising at least one of the foregoing.
As used herein the terms "polyethylene" (PE) and "ethylene polymer" may be used synonymously. The term "polyethylene" encompasses homopolyethylene as well as copolymers of ethylene which can be derived from ethylene and a co-monomer such as one or more selected from the group consisting of $C_3$-$C_{20}$ alpha-olefins, such as 1-butene, 1-propylene, 1-pentene, 1-hexene, 1-octene.

The term "polyethylene resin" as used herein refers to polyethylene fluff or powder that is extruded, and/or melted and/or pelletized and can be produced through compounding and homogenizing of the polyethylene resin as taught herein, for instance, with mixing and/or extruder equipment. As used herein, the term "polyethylene" may be used as a shorthand for "polyethylene resin".

The term "fluff" or "powder" as used herein refers to polyethylene material with the hard catalyst particle at the core of each grain and is defined as the polymer material after it exits the polymerization reactor (or the final polymerization reactor in the case of multiple reactors connected in series).

Under normal production conditions in a plant, it is expected that the melt flow index (MI2, HLMI, MI5) will be different for the fluff than for the polyethylene resin. Under normal production conditions in a plant, it is expected that the density will be slightly different for the fluff, than for the polyethylene resin. Unless otherwise indicated, density and melt flow index for the polyethylene resin refer to the density and melt flow index as measured on the polyethylene resin as defined above. The density of the polyethylene resin refers to the polymer density as such, not including additives such as pigments unless otherwise stated.

The term "carbon particles" as used herein encompasses carbon nanotubes and nanographene but excludes carbon fibres and carbon black.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the recited endpoint values themselves (e.g. from 1.0 to 5.0 includes both 1.0 and 5.0). Any numerical range recited herein is intended to include all sub-ranges subsumed therein.

The particular features, structures, characteristics or embodiments may be combined in any suitable manner, as would be apparent to a person skilled in the art from this disclosure, in one or more embodiments.

The conductive articles

The disclosure provides a conductive article wherein the article is comprising or made from a composite material comprising:

- from 50 to 99 wt.% of polyethylene blend based on the total weight of said composite material, wherein the polyethylene blend has a high load melt flow index HLMI of at least 1 g/10 min and at most 50 g/10 min as determined according to ISO 1133 at 190 °C under a load of 21.6 kg;
- from 0.2 to 10 wt.% of carbon particles based on the total weight of said composite material as determined according to ISO 11358 selected from nanographene, carbon nanotubes or any combination thereof; preferably from 0.2 to 3.5 wt.% and
- 0.01 to 0.15 wt.% of an additive composition comprising at least 80 wt.% of one or more metallic stearates based on the total weight of said additive composition;

and further wherein the composite material has a surface resistivity of at most 1 E+06 ohm/sq as determined using a 2410 SourceMeter® apparatus and according to the method described hereinafter, preferably less than 1 E+05 ohm/sq.

The conductive articles according to the disclosure show lower content of carbon particles and lower content of additive composition than similar articles known from the prior art. As the filler content is lower, the articles have a better balance of electrical and mechanical properties. Moreover, the low content of carbon particles makes them less expensive to produce.

The article is selected from pipes, geomembranes, containers electrical packaging, thermoformed articles, heating panels or films. Preferably, the containers are car fuel tanks. The electrical packaging is protecting against electrostatic discharge (ESD).

The term "pipe" as used herein is meant to encompass pipes in the narrower sense, as well as supplementary parts like fittings, valves and all parts which are commonly necessary e.g. a hot water piping system.

Pipes according to the disclosure also encompass single and multilayer pipes, where for example one or more of the layers is a metal layer and which may include an adhesive layer. Other constructions of pipes, e.g. corrugated pipes, are possible as well.

Should multilayered pipes or multilayered containers (such as car fuel tanks) be considered, the conductive layer made from the composite material is the inner and/or the outer layer. Should multilayered geomembranes be considered, the conductive layer made from the composite material is one or both of the surface layers.

In a preferred embodiment, the conductive article has a surface resistivity lower than 1 E+05 ohms/sq as determined using a 2410 SourceMeter® apparatus and according to the method described hereafter; preferably lower than 8 E+04 ohms/sq. The conductive article may have a surface resistivity of at least 1 E+02 ohm/sq, preferably, of at least 5 E+02 ohm/sq as determined as determined using a 2410 SourceMeter® apparatus and according to the method described hereafter.

For example, the polyethylene blend is the blend of a first polyethylene resin having a melt flow index MI2 ranging from 1 to 500 g/10 min as determined according to ISO 1133 at 190 °C under a load of 2.16 kg, preferably ranging from 1 to 250 g/10 min, and of a second polyethylene resin having a melt flow index MI2 of less than 100 g/10 min as determined according to ISO 1133 at 190 °C under a load of 2.16 kg, with preference the first polyethylene resin is the resin originated from the masterbatch as defined above and/or the second polyethylene is having a melt flow index MI2 of less than 10 g/10min.

According to the disclosure, the polyethylene blend is a blend of a first polyethylene resin and a second polyethylene resin and has a bimodal molecular weight distribution.

In an embodiment, the first polyethylene resin is used in the masterbatch and has a melt flow index MI2 ranging from 1 to 500 g/10 min as determined according to ISO 1133 at 190 °C under a load of 2.16 kg, preferably ranging from 1 to 250 g/10 min preferably ranging from 2 to 150 g/10 min or from 3 to 15 g/10 min.

The second polyethylene resin is selected to be suitable for the application considered (pipe, containers, films).

Whatever the application considered, the polyethylene blend has preferably a high load melt flow index HLMI of at most 50 g/10 min as determined according to ISO 1133 at 190 °C under a load of 21.6 kg, preferably of at most 45 g/10 min, and more preferably of at most 40 g/10 min.

For example, the second polyethylene resin has a melt flow index MI2 that is selected according to the final conductive article to be produced. For example, the second polyethylene resin having a melt flow index MI2 of less than 100 g/10 min as determined according to ISO 1133 at 190 °C under a load of 2.16 kg, preferably of less than 50 g/10 min, more preferably of less than 10 g/10min and even more preferably in a range of less than 0.45 g/10 min; or in the range of 0.7 to 1.5 g/10 min; or in the range of 0.7 to 1.5 g/10 min; or in the range of 0.7 to 4.0 g/10 min; or in the range of 6.0 to 9.0 g/10 min.

For example, the polyethylene blend is a blend of a first polyethylene resin and a second polyethylene resin, wherein the second polyethylene resin has a melt flow index MI2 of less than 0.45 g/10 min as determined according to ISO 1133 at 190 °C under a load of 2.16 kg, preferably of less than 0.42 g/10 min, more preferably of less than 0.40 g/10 min and even more preferably of less than 0.35 g/10 min.

For example, the polyethylene blend is a blend of a first polyethylene resin and a second polyethylene resin, wherein the second polyethylene resin has a melt flow index MI2 in the range of 0.7 to 4.0 g/10 min; or in the range of 0.7 to 2.5 g/10 min; or in the range of 0.7 to 1.5 g/10 min.

For example, the polyethylene blend is a blend of a first polyethylene resin and a second polyethylene resin, wherein the second polyethylene resin has a melt flow index MI2 in the range of 6.0 to 9.0 g/10 min.

In an embodiment, the conductive article is a film and has a total defect area of less than 3500 ppm as determined by an optical control system (OCS), preferably less than 3000 ppm.

In an embodiment, the conductive article is a film and has less than 5000 defects of size over 1000 $\mu$m/m$^2$, as measured by an optical control system (OCS), preferably less than 4500 defects, more preferably less than 4000 defects.

The defects of a size over 1000 $\mu$m/m$^2$ comprises both gels (fisheyes) and CNT agglomerates.

However, it is possible to further select more precisely the second polyethylene by the targeted application.

In a preferred embodiment, wherein the article is a pipe, the second polyethylene resin may be selected as follows:
Preferably, the second polyethylene resin has a high load melt flow index HLMI of at least 5 g/10 min as determined according to ISO 1133 at 190 °C under a load of 21.6 kg, preferably of at least 6 g/10 min, and more preferably of at least 7 g/10 min.

To achieve targeted mechanical properties on pipes, the second polyethylene resin may have a melt flow index MI5 of at least 0.1 g/10 min as determined according to ISO 1133 at 190 °C under a load of 5 kg, preferably of at least 0.2 g/10 min.

In an embodiment, the second polyethylene resin may have a melt flow index MI5 of at most 5.0 g/10 min as determined according to ISO 1133 at 190 °C under a load of 5 kg, preferably of at most 2.0 g/10 min, more preferably of at most 1.5 g/10 min, even more preferably of at most 1.0 g/10 min, most preferably of at most 0.9 g/10 min, and even most preferably of at most 0.7 g/10 min.

In embodiments requiring the second polyethylene to be of the PE80 grade or the PE100 grade, the second polyethylene resin has preferably a high load melt flow index HLMI of at most 20 g/10 min as determined according to ISO 1133 at 190 °C under a load of 21.6 kg, preferably of at most 18 g/10 min, and more preferably of at most 14 g/10 min.

The second polyethylene resin may be any PE80 grade, PE100 grade or PE-RT grade commercially available.

In another embodiment, wherein the article is a container, the second polyethylene resin may be selected to have a high load melt flow index HLMI of at least 5 g/10 min as determined according to ISO 1133 at 190 °C under a load of 21.6 kg, preferably of at least 6 g/10 min.

The second polyethylene resin may be any container or car fuel tank grade commercially available.

In another embodiment, wherein the article is a geomembrane, the second polyethylene resin may be selected to have a high load melt flow index HLMI of at most 20 g/10 min as determined according to ISO 1133 at 190 °C under a load of 21.6 kg, preferably of at most 18 g/10 min, and more preferably of at most 15 g/10 min.

Whatever the article is (a geomembrane, a pipe or a container), the second polyethylene resin has preferably a density of at least 0.920 $g/cm^3$ or at least 0.925 $g/cm^3$ as determined according to ISO 1183 at a temperature of 23 °C, and preferably of at least 0.935 $g/cm^3$.

In an embodiment, the second polyethylene resin has preferably a density of at most 0.980 $g/cm^3$ or at most 0.970 $g/cm^3$ as determined according to ISO 1183 at a temperature of 23 °C, preferably of at most 0.960 $g/cm^3$ more preferably of at most 0.955 $g/cm^3$.

For pipe and container applications, the second polyethylene resin has preferably a density of at least 0.930 $g/cm^3$ and at most 0.960 $g/cm^3$ as determined according to ISO 1183 at a temperature of 23 °C. For geomembranes, the second polyethylene resin has a density of at least 0.920 $g/cm^3$ and of at most 0.945 $g/cm^3$ as determined according to ISO 1183 at a temperature of 23 °C.

The second polyethylene resin may have a molecular weight distribution Mw/Mn of at least 2 and of at most 25, Mw is the weight-average molecular weight and Mn is the number-average molecular weight, preferably the second polyethylene resin has a molecular weight distribution Mw/Mn of at least 7 and/or of at most 20.

The second polyethylene resin has a monomodal molecular weight distribution or a bimodal molecular weight distribution, preferably the second polyethylene resin has a bimodal molecular weight distribution.

As used herein, the term "monomodal polyethylene" or "polyethylene with a monomodal molecular weight distribution" refers to polyethylene having one maximum in their molecular weight distribution curve, which is also defined as a unimodal distribution curve. As used herein, the term "polyethylene with a bimodal molecular weight distribution" or "bimodal polyethylene" refers to polyethylene having a distribution curve being the sum of two unimodal molecular weight distribution curves, and refers to a polyethylene product having two distinct but possibly overlapping populations of polyethylene macromolecules each having different weight average molecular weights. As used herein, the term "polyethylene with a multimodal molecular weight distribution" or "multimodal polyethylene" refers to polyethylene wherein a distribution curve is the sum of at least two, preferably more than two unimodal distribution curves, and refers to a polyethylene product having two or more distinct but possibly overlapping populations of polyethylene macromolecules each having different weight average molecular weights. The multimodal polyethylene resin of the article can have an "apparent monomodal" molecular weight distribution, which is a molecular weight distribution curve with a single peak and no shoulder. In an embodiment, said polyethylene resin having a multimodal, preferably bimodal, molecular weight distribution can be obtained by physically blending at least two polyethylene fractions. In a preferred embodiment, said polyethylene resin having a multimodal, preferably bimodal, molecular weight distribution can be obtained by chemical blending of at least two polyethylene fractions, for example by using at least 2 reactors connected in series.

The second polyethylene can be produced by polymerizing ethylene and one or more optional co-monomers, and optionally hydrogen, in the presence of a catalyst being a metallocene catalyst, a Ziegler-Natta catalyst or a chromium catalyst.

In an embodiment, the second polyethylene resin is a Ziegler-Natta catalyzed polyethylene resin, preferably having a bimodal molecular weight distribution.

The term "Ziegler-Natta catalyst" or "ZN catalyst" refers to catalysts having a general formula $M^1X_V$, wherein $M^1$ is a transition metal compound selected from group IV to VII from the periodic table of elements, wherein X is a halogen, and wherein v is the valence of the metal. Preferably, $M^1$ is a group IV, group V or group VI metal, more preferably titanium, chromium or vanadium and most preferably titanium. Preferably, X is chlorine or bromine, and most preferably, chlorine. Illustrative examples of the transition metal compounds comprise but are not limited to TiCl3 and TiCl4. Suitable ZN catalysts for use in the disclosure are described in US6930071 and US6864207, which are incorporated herein by reference.

In an embodiment, the second polyethylene resin is a chromium catalyzed polyethylene resin, preferably having a monomodal molecular weight distribution.

The term "chromium catalysts" refers to catalysts obtained by deposition of chromium oxide on a support, e.g. a silica or aluminum support. Illustrative examples of chromium catalysts comprise but are not limited to $CrSiO_2$ or $CrAl_2O_3$.

In an embodiment, the second polyethylene resin is obtained in the presence of a single site catalyst, preferably a metallocene catalyst. Preferably the second polyethylene has a bimodal molecular weight distribution.

The single-site catalyst-based catalytic systems are known to the person skilled in the art. Amongst these catalysts, metallocene catalysts are preferred. The metallocene catalysts are compounds of Group IV transition metals of the Periodic Table such as titanium, zirconium, hafnium, etc., and have a coordinated structure with a metal compound and a ligand composed of one or two groups of cyclopentadienyl, indenyl, fluorenyl or their derivatives. The use of metallocene catalysts in the polymerisation of olefins has various advantages. Metallocene catalysts have high activities and are capable of preparing polymers with enhanced physical properties. Metallocenes comprise a single metal site, which allows for more control of branching and molecular weight distribution of the polymer.

The metallocene component used to prepare the second polyethylene can be any unbridged or bridged metallocene known in the art, preferably it is a bridged metallocene.

In a preferred embodiment, the metallocene component is supported.

Supporting method and polymerisation processes are described in many patents, for example in WO2012/001160A2 which is enclosed by reference in its entirety. Preferably it is a metallocene represented by the following general formula:

$$\mu\text{-}R^1(C_5R^2R^3R^4R^5)(C_5R^6R^7R^8R^9)MX^1X^2 \qquad (III)$$

wherein:

- the bridge $R^1$ is $-(CR^{10}R^{11})_p$- or $-(SiR^{10}R^{11})_p$- with p = 1 or 2, preferably it is - $(SiR^{10}R^{11})$-;
- M is a metal selected from Ti, Zr and Hf, preferably it is Zr;
- $X^1$ and $X^2$ are independently selected from the group consisting of halogen, hydrogen, $C_1$-$C_{10}$ alkyl, $C_6$-$C_{15}$ aryl, alkylaryl with $C_1$-$C_{10}$ alkyl and $C_6$-$C_{15}$ aryl;
- $R^2$, $R^3$, $R^4$, $R^5$, $R^6$, $R^7$, $R^8$, $R^9$, $R^{10}$ and $R^{11}$ are each independently selected from the group consisting of hydrogen, $C_1$-$C_{10}$ alkyl, $C_5$-$C_7$ cycloalkyl, $C_6$-$C_{15}$ aryl, alkylaryl with $C_1$-$C_{10}$ alkyl and $C_6$-$C_{15}$ aryl, or any two neighboring R may form a cyclic saturated or non-saturated $C_4$-$C_{10}$ ring; each $R^2$, $R^3$, $R^4$, $R^5$, $R^6$, $R^7$, $R^8$, $R^9$, $R^{10}$ and $R^{11}$ may, in turn, be substituted in the same way.

The preferred metallocene components are represented by the general formula (III), wherein

- the bridge $R^1$ is $SiR^{10}R^{11}$;
- M is Zr;
- $X^1$ and $X^2$ are independently selected from the group consisting of halogen, hydrogen, and $C_1$-$C_{10}$ alkyl; and
- $(C_5R^2R^3R^4R^5)$ and $(C_5R^6R^7R^8R^9)$ are indenyl of the general formula $C_9R^{12}R^{13}R^{14}R^{15}R^{16}R^{17}R^{18}R^{19}$, wherein $R^{12}$, $R^{13}$, $R^{14}$, $R^{15}$, $R^{16}$, $R^{17}$, and $R^{18}$ are each independently selected from the group consisting of hydrogen, $C_1$-$C_{10}$ alkyl, $C_5$-$C_7$ cycloalkyl, $C_6$-$C_{15}$ aryl, and alkylaryl with $C_1$-$C_{10}$ alkyl and $C_6$-$C_{15}$ aryl, or any two neighboring R may form a cyclic saturated or non-saturated $C_4$-$C_{10}$ ring;
- $R^{10}$ and $R^{11}$ are each independently selected from the group consisting of $C_1$-$C_{10}$ alkyl, $C_5$-$C_7$ cycloalkyl, and $C_6$-$C_{15}$ aryl, or $R^{10}$ and $R^{11}$ may form a cyclic saturated or non-saturated $C_4$-$C_{10}$ ring; and
- each $R^{10}$, $R^{11}$, $R^{12}$, $R^{13}$ $R^{14}$ $R^{15}$ $R^{16}$ $R^{17}$ and $R^{18}$ may, in turn, be substituted in the same way.

Particularly suitable metallocenes are those having $C_2$-symmetry or several characterized by a C1 symmetry.

Examples of particularly suitable metallocenes are:

- dimethylsilanediyl-bis(cyclopentadienyl)zirconium dichloride,
- dimethylsilanediyl-bis(2-methyl-cyclopentadienyl)zirconium dichloride,
- dimethylsilanediyl-bis(3-methyl-cyclopentadienyl)zirconium dichloride,
- dimethylsilanediyl-bis(3-tert-butyl-cyclopentadienyl)zirconium dichloride,
- dimethylsilanediyl-bis(3-tert-butyl-5-methyl-cyclopentadienyl)zirconium dichloride,
- dimethylsilanediyl-bis(2,4-dimethyl-cyclopentadienyl)zirconium dichloride,
- dimethylsilanediyl-bis(indenyl)zirconium dichloride,
- dimethylsilanediyl-bis(2-methyl-indenyl)zirconium dichloride,
- dimethylsilanediyl-bis(3-methyl-indenyl)zirconium dichloride,
- dimethylsilanediyl-bis(3-tert-butyl-indenyl)zirconium dichloride,
- dimethylsilanediyl-bis(4,7-dimethyl-indenyl)zirconium dichloride,
- dimethylsilanediyl-bis(tetrahydroindenyl)zirconium dichloride,
- dimethylsilanediyl-bis(benzindenyl)zirconium dichloride,
- dimethylsilanediyl-bis(3,3'-2-methyl-benzindenyl)zirconium dichloride,
- dimethylsilanediyl-bis(4-phenyl-indenyl)zirconium dichloride,
- ethylene-bis(indenyl)zirconium dichloride,
- ethylene-bis(tetrahydroindenyl)zirconium dichloride,
- isopropylidene-(3-tert-butyl-5-methyl-cyclopentadienyl)(fluorenyl) zirconium dichloride.

With preference, the metallocene is ethylene-bis(tetrahydroindenyl)zirconium dichloride.

The metallocene may be supported according to any method known in the art. In this case, the support used in the present disclosure can be any organic or inorganic solid, particularly a porous support such as silica, talc, inorganic oxides, and resinous support material such as polyolefin. Preferably, the support material is an inorganic oxide in its finely divided form.

The second polyethylene resin may be a polyethylene copolymer, which is a copolymer of ethylene and at least one co-monomer selected from $C_3$-$C_{20}$-alpha olefin. As used herein, the term "comonomer" refers to olefin co-monomers which are suitable for being polymerized with ethylene monomers. Co-monomers may comprise but are not limited to aliphatic $C_3$-$C_{20}$ alpha-olefins. Examples of suitable aliphatic $C_3$-$C_{20}$ alpha-olefins include propylene, 1-butene, 1-pentene, 4-methyl-1-pentene, 1-hexene, 1-octene, 1-decene, 1-dodecene, 1-tetradecene, 1-hexadecene, 1-octadecene and 1-eicosene. Preferably, the co-monomer is 1-hexene.

Where the second polyethylene resin is a polyethylene copolymer, it preferably has a co-monomer content of at least 1 wt.% and at most 5 wt.% based on the total weight of the polyethylene copolymer.

Polyethylene resins suitable for the disclosure (such as pipe grades or blow moulding grades) are commercially available from TOTAL®. Non-limitative examples are:

- a PE 80 pipe grade is available under the commercial denomination 3802 B. The resin 3802 B has a density of 0.948 g/cm³, a melt flow index MI2 of 0.2 g/10 min as determined according to ISO 1133 at 190 °C under a load of 2.16 kg, and a melt flow index MI5 of 0.9 g/10 min as determined according to ISO 1133 at 190 °C under a load of 5 kg;
- a PE 100 pipe grade is available under the commercial denomination XSENE® XCS 50 ORANGE. This product has a density of 0.949 g/cm³ and a melt flow index MI5 of 0.3 g/10 min as determined according to ISO 1133 at 190 °C under a load of 5 kg;
- a PE-RT pipe grade is available under the commercial denomination XRT 70. This product has a density of 0.947 g/cm³ and a melt flow index MI5 of 0.7 g/10 min as determined according to ISO 1133 at 190 °C under a load of 5 kg;
- a blow moulding grade suitable for the production of containers is available under the commercial denomination 51090. This product has a density of 0.950 g/cm³ and a high load melt flow index HLMI of 7 g/10 min as determined according to ISO 1133 at 190 °C under a load of 21.6 kg;
- a blow moulding grade suitable for the production of containers is available under the commercial denomination 53090. This product has a density of 0.953 g/cm³ and a high load melt flow index HLMI of 9 g/10 min as determined according to ISO 1133 at 190 °C under a load of 21.6 kg.
- a film grade suitable for the production of films is available under the commercial denomination Lumicene M1810EP. This product has a density of 0.918 g/cm³ and a high load melt flow index MI2 of 0.9 g/10 min as determined according to ISO 1133 at 190 °C under a load of 2.16 kg.
- resins suitable for the production of heating panels can be selected from HDPE 5502, having an MI2 of 0.25 g/10 min and a density of 0.954 g/cm³. Lumicene Supertough 22ST05 having an MI2 of 0.5 g/10 min and a density of 0.932 g/cm³. FE 8000 having an MI2 of 0.8 g/10 min and a density of 0.924 g/cm³. Lumicene M2710EP having an MI2 of 0.9 g/10 min and a density of 0.927 g/cm³. Q1018N having an MI2 of 1.0 g/10 min and a density of 0.918 g/cm³. M3581 UV having an MI2 of 6 g/10 min and a density of 0.935 g/cm³.

The first polyethylene resin and/or the second polyethylene resin may comprise one or more polyethylene post-consumer resins. Thus, in an embodiment, the first polyethylene resin is selected from a virgin polyethylene resin, a polyethylene post-consumer resin and a blend of a virgin polyethylene resin and a polyethylene post-consumer resin. In an embodiment, the second polyethylene resin is selected from a virgin polyethylene resin, a polyethylene post-consumer resin and a blend of a virgin polyethylene resin and a polyethylene post-consumer resin.

An example of a commercially available stream of polyethylene post-consumer resin (PCR-PE) that can be used according to the disclosure is KWR105M2 marketed by KW Plastics.

When the first polyethylene resin and/or second polyethylene resin is or comprises a post-consumer resin; the MI2 of the polyethylene post-consumer resin can be selected in the same manner than for the virgin resin.

For example, the first polyethylene resin:

- comprises from 10 to 99 wt.% of polyethylene post-consumer resin based on the total weight of the first polyethylene resin; for example, from 20 to 90 wt.%; for example, from 40 to 80 wt.%; for example, from 50 to 70 wt.%; and/or

- is or comprises a post-consumer resin; wherein the polyethylene post-consumer resin has an MI2 ranging from 1 to 13 g/10 min as determined according to ISO 1133-2011 at 230 °C under a load of 2.16 kg; for example, from 3 to 10 g/10 min; and/or

- is or comprises a post-consumer resin; wherein the polyethylene post-consumer resin is a blend of recycled polypropylene and recycled polyethylene, wherein the content of the recycled polypropylene is ranging from 2 to 15 wt.% relative to the total weight of the polyethylene post-consumer resin.

For example, the second polyethylene resin:

- comprises from 10 to 99 wt.% of polyethylene post-consumer resin based on the total weight of the second polyethylene resin; for example, from 20 to 90 wt.%; for example, from 40 to 80 wt.%; for example, from 50 to 70 wt.%; and/or

- is or comprises a post-consumer resin; wherein the polyethylene post-consumer resin has an MI2 of less than 100 g/10 min as determined according to ISO 1133-2011 at 230 °C under a load of 2.16 kg; for example, less than 10 g/10 min; and/or

- is or comprises a post-consumer resin; wherein the polyethylene post-consumer resin is a blend of recycled polypropylene and recycled polyethylene, wherein the content of the recycled polypropylene is ranging from 2 to 15 wt.% relative to the total weight of the polyethylene post-consumer resin.

For example, the first polyethylene resin and/or the second polyethylene resin is or comprises a post-consumer resin; wherein the post-consumer resin is a blend of recycled polyethylene and recycled polyethylene, wherein the content of the recycled polypropylene is ranging from 3 to 25 wt.% relative to the total weight of the post-consumer resin. In a preferred embodiment, the post-consumer resin comprises less than 10 wt.% based on the total weight of the recycled resin of polymers other than polyethylene. For example, the post-consumer resin may contain up to 10 wt.% of polypropylene based on the total weight of the post-consumer resin; for example from 3 to 10 wt.%.

The carbon particles

In all embodiments, the carbon particles of the composite material are a carbonaceous material. In a preferred embodiment, the carbon particles of the composite material are nanoparticles. The nanoparticles used in the present disclosure can generally be characterized by having a size (diameter) from 1 nm to and 5 $\mu$m. In the case of, for example, nanotubes, this definition of size can be limited to two dimensions only, i.e. the third dimension may be outside of these limits. Preferably, the nanoparticles are selected from the group of carbon nanoparticles. In an embodiment, the nanoparticles are selected from the group comprising carbon nanotubes, carbon nanofibers, nanographene, nanographite, and blends thereof. Preferably, the nanoparticles are selected from the group comprising carbon nanotubes, carbon nanofibers, nanographenes and blends thereof; more preferably carbon nanotubes, nanographene, and blends of these; and most preferably carbon nanotubes.

In an embodiment, the carbon particles are nanographenes and the composite material comprises from 5.0 to 10.0 wt% of carbon particles based on the total weight of the composite material as determined according to ISO11358, preferably the composite material comprises from 6.0 to 9.0 wt% of carbon particles based on the total weight of the composite material. The disclosure provides an article produced from a composite material having a reduced content of carbon nanographenes compared to the prior art. Thus preferably, the composite material comprises at most 9.0 wt.% of carbon particles being carbon nanographene based on the total weight of said composite material as determined according to ISO 11358, preferably at most 8.5 wt.%, and more preferably at most 8.0 wt.%, even more preferably at most 7.5 wt.% and most preferably at most 7.0 wt.%.

In an embodiment, the carbon particles are nanographenes and the composite material comprises from 5.0 to 10.0 wt.% of carbon particles based on the total weight of the composite material as determined according to ISO11358, preferably the composite material comprises from 6.0 to 9.0 wt.% of carbon particles based on the total weight of the composite material.

In a preferred embodiment, the carbon particles are carbon nanotubes, and the disclosure provides an article produced from a composite material having a reduced content of carbon nanotubes compared to the prior art. Thus preferably, the composite material comprises at most 5.0 wt.% of carbon particles based on the total weight of said composite material as determined according to ISO 11358; preferably at most 4.0 wt.% more preferably at most 3.5 wt.% preferably at most 3.2 wt.%, and more preferably at most 3.0 wt.%, even more preferably at most 2.8 wt.% and most preferably at most 2.5 wt.%.

With preference, the composite material comprises at least 0.2 wt.% of carbon nanotubes based on the total weight of said composite material as determined according to ISO 11358, preferably at least 0.5 wt.%, and more preferably at least 1.0 wt.%.

Suitable carbon nanotubes used in the present disclosure can generally be characterized by having a size from 1 nm to 5 $\mu$m, this definition of size can be limited to two dimensions only, i.e. the third dimension may be outside of these limits.

In a preferred embodiment, at least 80 wt.% of the carbon nanotubes have an average length of 1.2 $\mu$m or more; preferably, all the carbon nanotubes have an average length of 1.2 $\mu$m or more. This can be achieved by a physical blending of carbon nanotubes of different sizes.

Suitable carbon nanotubes also referred to as "nanotubes" herein, can be cylindrical and structurally related to fullerenes, an example of which is Buckminster fullerene ($C_{60}$). Suitable carbon nanotubes may be open or capped at their ends. The end cap may, for example, be a Buckminster-type fullerene hemisphere. Suitable carbon nanotubes used in the present disclosure can comprise more than 90%, more preferably more than 95%, even more preferably more than 99% and most preferably more than 99.9% of their total weight in carbon. However, minor amounts of other atoms may also be present.

Carbon nanotubes can exist as single-walled nanotubes (SWNT) and multi-walled nanotubes (MWNT), i.e. carbon nanotubes having one single wall and nanotubes having more than one wall, respectively. In single-walled carbon nanotubes a one atom thick sheet of atoms, for example a one atom thick sheet of graphite (also called graphene), is rolled seamlessly to form a cylinder. Multi-walled carbon nanotubes consist of several such cylinders arranged concentrically. The arrangement in multi-walled carbon nanotubes can be described by the so-called Russian doll model, wherein a larger doll opens to reveal a smaller doll.

In an embodiment, the carbon nanotubes are single-walled nanotubes characterized by an outer diameter of at least 0.5 nm, more preferably of at least 1 nm, and most preferably of at least 2 nm. Preferably their outer diameter is at most 50 nm, more preferably at most 30 nm and most preferably at most 10 nm. Preferably, the length of single-walled nanotubes is at least 0.1 $\mu$m, more preferably at least 1 $\mu$m, even more preferably at least 10 $\mu$m. Preferably, their length is at most 50 $\mu$m, more preferably at most 25 $\mu$m.

In an embodiment, the carbon nanotubes are single-walled, preferably having an average length/diameter ratio (L/D ratio) of at least 1000.

In an embodiment, the carbon nanotubes are multi-walled, more preferably multi-walled carbon nanotubes having on average from 5 to 15 walls.

Multi-walled carbon nanotubes are preferably characterized by an outer diameter of at least 1 nm, more preferably of at least 2 nm, 4 nm, 6 nm or 8 nm, and most preferably of at least 9 nm. The preferred outer diameter is at most 100 nm, more preferably at most 80 nm, 60 nm or 40 nm, and most preferably at most 20 nm. Most preferably, the outer diameter is in the range from 10 nm to 20 nm. The preferred length of the multi-walled nanotubes is at least 50 nm, more preferably at least 75 nm, and most preferably at least 100 nm. In an embodiment, the multi-walled carbon nanotubes have an average outer diameter in the range from 10 nm to 20 nm or an average length in the range from 100 nm to 10 $\mu$m or both. In an embodiment, the average L/D ratio (length/diameter ratio) is at least 5, preferably at least 10, preferably at least 25, preferably at least 50, and more preferably higher than 100.

In an embodiment, the carbon nanotubes have an average L/D ratio of at least 1000 and the composite material comprises from 0.2 to 3.0 wt.% of carbon particles based on the total weight of the composite material as determined according to ISO 11358, preferably the composite material comprises from 0.5 to 2.5 wt.% % of carbon particles .

Suitable carbon nanotubes to be used in the present disclosure can be prepared by any method known in the art. Non-limiting examples of commercially available multi-walled carbon nanotubes are Graphistrength™ 100, available from Arkema, Nanocyl™ NC 7000 available from Nanocyl, FloTube™ 9000 available from CNano Technology.

Nanocyl™ NC 7000 available from Nanocyl are carbon nanotubes having an average L/D ratio of at most 500.

The additive composition

The composite material comprises an additive composition in a content ranging from 0.01 to 0.15 wt.%, wherein the additive composition comprises at least 80 wt.% of one or more metallic stearates based on the total weight of said additive composition; preferably at least 90 wt.%.

As used herein, metallic stearate refers to stearate salts that contain atoms of metal. The metal is selected from alkali metals, alkaline earth metals, transition metals, post-transition metals and metalloids, such as zinc, calcium, magnesium, sodium, potassium, aluminum, titanium, vanadium, chromium, manganese, iron, cobalt, nickel, copper, gallium, zirconium, silver, cadmium, indium, tin, antimony and the like.

Thus, in an embodiment, at least one metallic stearate is selected from zinc stearate, calcium stearate, magnesium stearate and any mixture thereof. Preferably, the metallic stearate is zinc stearate.

The additive composition may further comprise one or more other additives selected from waxes, polyethylene oxide, polyethylene glycol, fluoroelastomer, tristearin, erucyl amide, oleic acid amide, ethylene-acrylic acid copolymer, ethylene-vinyl acetate copolymer, cetyl trimethyl ammonium bromide, and any mixture thereof.

The additive composition can be added by any known method. In an embodiment, the additive composition is provided with the carbon particle-containing masterbatch, wherein said masterbatch contains from 0.05 to 5.0 wt. %, preferably from 0.10 to 4.5 wt.%, more preferably from 0.15 to 4.0 wt.%, even more preferably from 0.20 to 3.0 wt.%,

most preferably from 0.20 to 2.0 wt.% and even most preferably from 0.20 to 1.0 wt.% of the additive composition based on the total weight of the masterbatch.

In a preferred embodiment, the masterbatch comprises at most 1.0 wt.% of the additive composition based on the total weight of said masterbatch, preferably at most 0.5 wt.%, more preferably at most 0.25 wt.%.

In a preferred embodiment, the masterbatch comprises at least 0.05 wt.% of the additive composition based on the total weight of said masterbatch, preferably at least 0.10 wt.%, more preferably at least 0.15 wt.%, and even more preferably at least 0.20 wt. %.

In all embodiments of the disclosure, the composite material may comprise from 0% to 45% by weight of one or more filler, preferably from 1% to 35 % by weight. The one or more filler is selected from the group consisting of talc, calcium carbonate, calcium hydroxide, barium sulfate, mica, calcium silicate, clay, kaolin, silica, alumina, wollastonite, magnesium carbonate, magnesium hydroxide, titanium oxide, zinc oxide, zinc sulfate, natural fibres, glass fibres. With preference, the filler is talc.

In all embodiments of the disclosure, the composite material may further comprise a second additive composition comprising one or more additives different from the ones listed above, the one or more additive being selected from the group comprising an antioxidant, an antiacid, a UV-absorber, an antistatic agent, a light stabilizing agent, an acid scavenger, a lubricant, a nucleating/clarifying agent, a colorant or a peroxide. An overview of suitable additives may be found in Plastics Additives Handbook, ed. H. Zweifel, 5th edition, 2001, Hanser Publishers, which is hereby incorporated by reference in its entirety.

In an embodiment, the composite material comprises from 0.1 to 10.0 wt.% based on the total weight of the composite material of a second additive composition. When present the second additive composition is added in addition to the additive composition that is provided with the carbon particle-containing masterbatch.

The disclosure also encompasses an article made of composite material, wherein the composite material comprises from 0% to 10% by weight of a second additive composition, based on the total weight of the composite material. In a preferred embodiment, said composite material comprises less than 5% by weight of a second additive composition, based on the total weight of the composite material, for example from 0.1 to 3% by weight of a second additive composition, based on the total weight of the composite material.

In an embodiment, the second additive composition of the composite material comprises an antioxidant. Suitable antioxidants include, for example, phenolic antioxidants such as pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), 3DL-alpha-tocopherol, 2,6-di-tert-butyl-4-methylphenol, dibutylhydroxyphenylpropionic acid stearyl ester, 3,5-di-tert-butyl-4-hydroxyhydrocinnamic acid, 2,2'-methylenebis(6-tert-butyl-4-methylphenol), hexamethylene bis[3-(3,5-di-tert-butyl-4-hydroxyphenyl)propionate], benzenepropanamide,N,N'-1,6-hexanediyl bis[3,5-bis(1,1-dimethylethyl)-4-hydroxy] (Antioxidant 1098), Diethyl 3.5-Di-Tert-Butyl-4-Hydroxybenzyl Phosphonate, Calcium bis[monoethyl(3,5-di-tert-butyl-4-hydroxylbenzyl)phosphonate], Triethylene glycol bis(3-tert-butyl-4-hydroxy-5-methylphenyl)propionate (Antioxidant 245), 6,6'-di-tert-butyl-4,4'-butylidenedi-m-cresol, 3,9-bis(2-(3-(3-tert-butyl-4-hydroxy-5-methylphenyl)propionyloxy-1,1-dimethylethyl)-2,4,8,10-tetraoxaspiro[5.5]undecane, 1,3,5-trimethyl-2,4,6-tris(3,5-di-tert-butyl-4-hydroxybenzyl)benzene, 1,1,3-tris(2-methyl-4-hydroxy-5-tert-butylphenyl)butane, (2,4,6-trioxo-1,3,5-triazine-1,3,5(2H,4H,6H)-triyl)triethylene tris[3-(3,5-di-tert-butyl-4-hydroxyphenyl)propionate], tris(3,5-di-tert-butyl-4-hydroxybenzyl) isocyanurate, Tris(4-tert-butyl-3-hydroxy-2,6-dimethylbenzyl) isocyanurate, ethylene bis[3,3-bis(3-tert-butyl-4-hydroxyphenyl)butyrate], and 2,6-bis[[3-(1,1-dimethylethyl)-2-hydroxy-5-methylphenyl] octahydro-4,7-methano-1H-indenyl]-4-methyl-phenol. Suitable antioxidants also include, for example, phenolic antioxidants with dual functionality such 4,4'-Thio-bis(6-tert-butyl-m-methyl phenol) (Antioxidant 300), 2,2'-Sulfanediylbis(6-tert-butyl-4-methylphenol) (Antioxidant 2246-S), 2-Methyl-4,6-bis(octylsulfanylmethyl)phenol, thiodiethylene bis[3-(3,5-di-tert-butyl-4-hydroxyphenyl)propionate], 2,6-di-tert-butyl-4-(4,6-bis(octylthio)-1,3,5-triazin-2-ylamino)phenol, N-(4-hydroxyphenyl)stearamide, bis(1,2,2,6,6-pentamethyl-4-piperidyl) [[3,5-bis(1,1-dimethylethyl)-4-hydroxyphenyl]methyl]butylmalonate, 2,4-di-tert-butylphenyl 3,5-di-tert-butyl-4-hydroxybenzoate, hexadecyl 3,5-di-tert-butyl-4-hydroxy-benzoate, 2-(1,1-dimethylethyl)-6-[[3-(1,1-dimethylethyl)-2-hydroxy-5-methylphenyl] methyl]-4-methylphenyl acrylate, and Cas nr. 128961-68-2 (Sumilizer GS). Suitable antioxidants also include, for example, aminic antioxidants such as N-phenyl-2-naphthylamine, poly(1,2-dihydro-2,2,4-trimethyl-quinoline), N-isopropyl-N'-phenyl-p-phenylenediamine, N-Phenyl-1-naphthylamine, CAS nr. 68411-46-1 (Antioxidant 5057), and 4,4-bis(alpha,alpha-dimethylbenzyl)diphenylamine (Antioxidant KY 405). Preferably, the antioxidant is selected from pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), or a mixture thereof.

The process to produce the conductive article

The disclosure provides a process to produce a conductive article as defined according to the fourth aspect, the conductive article being produced from a composite material wherein the process comprises the following steps:

a) providing a masterbatch comprising a blend of:

- from 71.0 to 95.0 wt.% of a second polyethylene resin based on the total weight of said masterbatch, wherein the second polyethylene resin has a melt flow index MI2 ranging from 1 to 500 g/10 min as determined according to ISO 1133 at 190 °C under a load of 2.16 kg, preferably ranging from 1 to 250 g/10 min; and
- at least 5.0 wt.% of carbon particles based on the total weight of said masterbatch as determined according to ISO 11358 selected from nanographene, carbon nanotubes or any combination thereof;
  wherein the masterbatch further comprises from 0.1 to 4.5 wt.% of an additive composition comprising at least 80 wt.% of a metallic stearate based on the total weight of said additive composition;

b) providing a second polyethylene resin having a melt flow index MI2 of less than 100 g/10 min as determined according to ISO 1133 at 190 °C under a load of 2.16 kg, preferably of less than 50 g/10 min, more preferably of less than 10 g/10 min and even more preferably of less than 0.45 g/10 min; or in the range of 0.7 to 1.5 g/10 min; or in the range of 0.7 to 2.5 g/10 min; or in the range of 0.7 to 4.0 g/10 min; or in the range of 6.0 to 9.0 g/10 min;

c) blending said masterbatch and said second polyethylene resin by extrusion in an extruder comprising a transport zone and a melting zone maintained at a temperature greater than 180 °C,

d) forming an article by extrusion, thermoforming, blow moulding or injection moulding.

With preference, in all embodiments, step c) and step d) are performed together in a single extrusion apparatus or in a single injection moulding apparatus. Thus, the different components of the composite material are dry blended together and directly provided to the extrusion apparatus or to the injection moulding apparatus, these components being neither melt blended nor chopped into pellets before the shaping step (by extrusion or by injection) to form a pipe, a geomembrane or a container.

As used herein, the term "masterbatch" refers to concentrates of carbon particles (such as carbon nanotubes (CNT) or nanographene) and/or additives in a polymer, which is intended to be subsequently incorporated into another polymer miscible with the polymer already contained in the masterbatches. Use of masterbatches makes processes more easily adaptable to industrial scale, compared to direct incorporation of the carbon particles into the polyethylene composition. Per the disclosure, two polymers are miscible when they are of the same nature, in the present case both are polyethylene.

The masterbatch and the process to produce it

The disclosure provides a masterbatch for use in a process of preparing a composite material, the masterbatch comprising a blend of:

- from 71.0 to 95.0 wt.% of a first polyethylene resin based on the total weight of said masterbatch, wherein the first polyethylene resin has a melt flow index MI2 ranging from 1 to 500 g/10 min as determined according to ISO 1133 at 190 °C under a load of 2.16 kg, preferably ranging from 1 to 250 g/10 min; and
- at least 5.0 wt.% of carbon particles based on the total weight of said masterbatch as determined according to ISO 11358 selected from nanographene, carbon nanotubes or any combination thereof;

wherein the masterbatch further comprises from 0.1 to 4.5 wt.% of an additive composition, wherein the additive composition comprises at least 80 wt.% of one or more metallic stearates based on the total weight of said additive composition.

With preference, the masterbatch is produced by blending a first polyethylene resin having a melting temperature Tm1 as measured according to ISO 3146, carbon particles and an additive composition, in an extruder comprising a transport zone and a melting zone maintained at a temperature comprised between Tm1 + 1 °C and Tm1 + 50 °C, preferably comprised between Tm1 + 5 °C and Tm1 + 30 °C.

The first polyethylene resin has a melt flow index MI2 ranging from 1 to 250 g/10 min as measured according to ISO 1133 under a load of 2.16 kg; preferably from 2 to 150 g/10 min, more preferably from 3 to 100 g/10 min; even more preferably from 4 to 50 g/10 min or 6 to 15 g/10 min. From example, from 3 to 10 g/10 min. or from 2 to 8 g/10 min.

For example, the first polyethylene resin has a melt flow index MI2 of at most 250 g/10 min or at most 150 g/10 min as determined according to ISO 1133 at 190 °C under a load of 2.16 kg, preferably at most 100 g/10 min, more preferably at most 50 g/10 min, even more preferably at most 15 g/10 min, most preferably at most 14 g/10 min, or at most 12 g/10 min; even most preferably at most 10 g/10 min or at most 8 g/10 min.

For example, the first polyethylene resin has a melt flow index MI2 of at least 2 g/10 min as determined according to ISO 1133 at 190 °C under a load of 2.16 kg, preferably at least 3 g/10 min, more preferably at most 4 g/10 min and even more preferably at least 5 g/10 min.

The first polyethylene has a density of at least 0.920 g/cm$^3$ and of at most 0.980 g/cm$^3$ as determined according

to ISO 1183 at a temperature of 23 °C.

With preference, the first polyethylene resin has a melting temperature Tm1 as measured according to ISO11357-3 of at most 130 °C, preferably of at most 125 °C.

In an embodiment, the first polyethylene resin is a single-site catalyst catalyzed resin. Preferably, the first polyethylene resin is a metallocene-catalyzed polyethylene resin.

The first polyethylene resin has a molecular weight distribution Mw/Mn of at least 2 and of at most 7.

In an embodiment, the process for the preparation of the masterbatch according to the present disclosure comprises the steps of:

    i. providing carbon particles;
    ii. providing a first polyethylene resin having a melting temperature, Tm1, measured according to ISO 3146, and wherein said first polyethylene resin has a melt flow index preferably comprised between 1 and 500 g/10 min measured according to ISO 1133 under a load of 2.16 kg, preferably ranging from 1 to 250 g/10 min;
    iii. providing from 0.1 to 4.5 wt.% of an additive composition, wherein the additive composition comprises at least 15 wt.% of one or more metallic stearate based on the total weight of said additive composition;
    iv. blending said carbon particles, said additive composition and said first polyethylene resin by extrusion in an extruder comprising a transport zone and a melting zone maintained at a temperature comprised between Tm1 + 1 °C and Tm1 + 50 °C, preferably between Tm1 + 5 °C and Tm1 + 30 °C, and
    v. forming a masterbatch through a die, said masterbatch,

    •    comprising at least 5.0 wt.% of carbon particles based on the total weight of the masterbatch as determined according to ISO 11358, and
    •    having a high load melt flow index, HLMI, of from 2 g/10 min to 1000 g/10 min, preferably ranging from 10 to 1000 g/10 min, determined according to ISO 1133 under a load of 21.6 kg.

In a preferred embodiment, step iv is carried out on a co-rotating twin-screw extruder at a screw speed of at most 600 rpm, preferably ranging from 80 to 500 rpm; with preference from 150 to 450 rpm.

In a preferred embodiment, the temperature of the masterbatch at the extruder's outlet ranges from the crystallization temperature and the melting temperature of the masterbatch polymer.

In a preferred embodiment, the first polyethylene resin is a polyethylene homopolymer or a copolymer of ethylene with $C_3$-$C_{20}$ olefins; and the temperature within the transport and melting zone of the extruder, preferably over the entire length of the extruder, ranges from 140 °C to 180 °C, preferably from 140 °C to 170 °C, more preferably from 140 °C to 160 °C, most preferably from 150 °C to 160 °C. Preferably, the temperature of the masterbatch at the extruder's outlet may range from the crystallization temperature and the melting temperature of the polyethylene homopolymer or of the copolymer of ethylene with $C_3$-$C_{20}$ olefins.

An homopolymer according to this disclosure has less than 0.2 wt.%, preferably less than 0.1 wt.%, more preferably less than 0.05 wt.% and most preferably less than 0.005 wt.%, of alpha-olefins other than ethylene in the polymer. Most preferred, no other alpha-olefins are detectable. Accordingly, when the polyethylene of the disclosure is an homopolymer of ethylene, the co-monomer content in the polyethylene is less than 0.2 wt.%, more preferably less than 0.1 wt.%, even more preferably less than 0.05 wt.% and most preferably less than 0.005 wt.% based on the total weight of the polyethylene.

Step d) of forming an article

With preference, in all embodiments, step c) and step d) are performed together in a single extrusion apparatus or in a single injection moulding apparatus. Thus, the different components of the composite material are dry blended together and directly provided to the extrusion apparatus or to the injection moulding apparatus. The different components of the composite material are not melt blended and not chopped into pellets before the shaping step to form a pipe, a geomembrane or a container.

This embodiment encompasses the cases wherein the carbon particles are provided with a masterbatch so that the blending of the masterbatch with the first polyethylene resin and their shaping to form a shaped composite article is done in a single step and in a single extrusion or moulding device. The inventive process allows obtaining further enhanced electrical properties on the shaped article compared with processes comprising a first step of compounding the masterbatch with the first polyethylene resin to obtain a composition and a subsequent step of shaping the composition to form a shaped article.

Thus alternatively, in step c) of the present process, the blending is a dry blending of the masterbatch and the second polyethylene resin.

Pipes according to the disclosure can be produced by plasticizing first the composite material, or its components, in an extruder at temperatures in the range of from 200 °C to 250 °C and then extruding it through an annular die and cooling it.

Preferably, step d) of the present process is carried out in a twin-screw extruder with a screws rotation speed comprised between 5 to 1000 rpm, preferably between 10 and 750 rpm, more preferably between 15 and 500 rpm, most preferably between 20 and 400 rpm, in particular between 25 and 300 rpm. Twin-screw extruders are preferred to carry out step d) of the present process since high shear stress is generated which favours the enhancement of the electrical properties.

The extruders for producing the pipes can be single-screw extruders or twin-screw extruders or extruder cascades of homogenizing extruders (single-screw or twin-screw). To produce pellets from the fluff (when homogenizing and introducing the additives), a single-screw extruder can be used, preferably with an L/D of 20 to 40, or twin-screw extruders, preferably with an L/D of 20 to 40, preferably an extruder cascade is used. In some embodiments, supercritical $CO_2$ or water is used during extrusion to help homogenization. Variations could be considered as the use of supercritical $CO_2$ to help homogenization or use of water during extrusion. Optionally, a melt pump and/or a static mixer can be used additionally between the extruder and the ring die head. Ring shaped dies with diameters ranging from approximately 16 to 2000 mm and even greater are possible.

The melt composition arriving from the extruder can first be distributed over an annular cross-section via conically arranged holes and then fed to the core/die combination via a coil distributor or screen. If necessary, restrictor rings or other structural elements for ensuring uniform melt flow may additionally be installed before the die outlet.

After leaving the annular die, the pipe can be taken off over a calibrating mandrel, usually accompanied by cooling of the pipe by air cooling and/or water cooling, optionally also with inner water cooling.

Conversion into containers articles, such as car fuel tank articles, can be performed by blow-moulding process or by an injection process.

The container, such as the car fuel tank, according to the disclosure may be produced by the conventional blow moulding technique from a suitable parison extruded from a die. The parison could be monolayer or a multilayer parison. In this latter case, the conductive layer described in this disclosure is put as external layers (inner and/or outer layers).

The injection process, if considered, is similar to what is disclosed e.g. in EP1189781.

A manufacturing process for geomembranes is described in US20080318015.

The methods used to prepare geomembranes are either flat sheet extrusion or blown sheet extrusion. In both methods, the heart of the process is the extruder. Pellets are fed into the extruder typically by a screw system, they are then heated, placed under pressure and formed into a hot plastic mass before reaching the die. Once the components are in the hot plastic state, they can be formed either into a flat sheet by a dove-tail die or into a cylindrical sheet that is subsequently cut and folded out into a flat sheet.

In the flat sheet extrusion process, the hot plastic mass is fed into a dove-tail die and exits through a horizontal straight slit. Depending upon the width of the die, one or more extruders may be needed to feed the hot plastic mass into the die. High-quality metal oilers placed in front of the slit are used to control the thickness and surface quality of the sheets. These rollers must be able to sustain pressure and temperature variations without deformation, so they are connected to cooling liquids. The rollers are designed to control the uniformity of the sheet thickness, to reach less than 3% variation in thickness over the whole width. A third roller may be used to further cool the sheet and to improve its surface finish. The surface finish of the sheet is directly proportional to the quality of the rollers' surface. The evenly cooled finished material is then fed over support rollers to be wrapped onto a core pipe and rolled up.

In the blown extrusion process, the hot plastic mass is fed into a slowly rotating spiral die to produce a cylindrical sheet. Cooled air is blown into the centre of the cylinder creating a pressure sufficient to prevent its collapsing. The cylinder of sheeting is fed up vertically. It is then closed by being flattened over a series of rollers. After the cylinder is folded together, the sheet is cut and opened up to form a flat surface and then rolled up. The annular slit through which the cylinder sheet is formed is adjusted to control the sheet's thickness. Automatic thickness control is available in modern plants. Cooling is performed by the cool air blown into the centre of the cylinder and then during the rolling up process.

Coextrusion allows the combination of different materials into a single multi-layer sheet. If multi-layer structures are considered, the conductive layer described in this disclosure is put as external layers (inner and/or outer layers).

**Test methods**

The melt flow index ($MI2_{PE}$) of the polyethylene is determined according to ISO 1133 at 190 °C under a load of 2.16 kg. Method B is used - It is indeed a die of 2.096 mm diameter (length = 8 mm).

The melt flow index ($MI5_{PE}$) of the polyethylene is determined according to ISO 1133 at 190 °C under a load of 5 kg.

The high load melt flow index (HLMI) of the polyethylene is determined according to ISO 1133 at 190 °C under a load of 21.6 kg.

<u>Molecular weights</u> are determined by Size Exclusion Chromatography (SEC) and in particular by IR-detected gel permeation chromatography (GPC) at high temperature (145 °C). A sample of 10 mg of polyethylene is dissolved at 160 °C in 10 mL of trichlorobenzene (technical grade) for 1 hour. Analytical conditions for the GPC-IR from Polymer Char are:

- Injection volume: +/- 0.4 mL;
- Automatic sample preparation and injector temperature: 160 °C;
- Column temperature: 145 °C;
- Detector temperature: 160 °C;
- Column set: 2 Shodex AT-806MS and 1 Styragel HT6E;
- Flow rate: 1 mL/min;
- Mobile Phase: trichlorobenzene stabilized with 1000 ppm of butylhydroxytoluene (BHT) filtered through a 0.45 $\mu$m PTFE filter.
- Detector: IR5 Infrared detector (2800-3000 cm$^{-1}$);
- Calibration: Narrow standards of polystyrene (commercially available);
- Calculation for polyethylene: Based on Mark-Houwink relation ($\log_{10}(M_{PE})$ = 0.965909 $\log_{10}(M_{PS})$ - 0,28264); cut off on the low molecular weight end at $M_{PE}$ = 1000.

The molecular weight averages used in establishing molecular weight/property relationships are the number average ($M_n$), weight average ($M_w$) and z average ($M_z$) molecular weight. These averages are defined by the following expressions and are determined from the calculated $M_i$:

$$M_n = \frac{\sum_i N_i M_i}{\sum_i N_i} = \frac{\sum_i W_i}{\sum_i W_i / M_i} = \frac{\sum_i h_i}{\sum_i h_i / M_i}$$

$$M_w = \frac{\sum_i N_i M_i^2}{\sum_i N_i M_i} = \frac{\sum_i W_i M_i}{\sum_i M_i} = \frac{\sum_i h_i M_i}{\sum_i M_i}$$

$$M_z = \frac{\sum_i N_i M_i^3}{\sum_i N_i M_i^2} = \frac{\sum_i W_i M_i^2}{\sum_i W_i M_i} = \frac{\sum_i h_i M_i^2}{\sum_i h_i M_i}$$

Here $N_i$ and $W_i$ are the number and weight, respectively, of molecules having molecular weight Mi. The third representation in each case (farthest right) defines how one obtains these averages from SEC chromatograms. $h_i$ is the height (from baseline) of the SEC curve at the $i_{th}$ elution fraction and $M_i$ is the molecular weight of species eluting at this increment.

<u>The molecular weight distribution</u> (MWD) is then calculated as Mw/Mn.

<u>The $^{13}$C-NMR analysis</u> is performed using a 400 MHz or 500 MHz Bruker NMR spectrometer under conditions such that the signal intensity in the spectrum is directly proportional to the total number of contributing carbon atoms in the sample. Such conditions are well known to the skilled person and include for example sufficient relaxation time etc. In practice, the intensity of a signal is obtained from its integral, i.e. the corresponding area. The data is acquired using proton decoupling, 2000 to 4000 scans per spectrum with 10 mm room temperature through or 240 scans per spectrum with a 10 mm cryoprobe, a pulse repetition delay of 11 seconds and a spectral width of 25000 Hz (+/- 3000 Hz). The sample is prepared by dissolving a sufficient amount of polymer in 1,2,4-trichlorobenzene (TCB, 99%, spectroscopic grade) at 130 °C and occasional agitation to homogenise the sample, followed by the addition of hexadeuterobenzene ($C_6D_6$, spectroscopic grade) and a minor amount of hexamethyldisiloxane (HMDS, 99.5+ %), with HMDS serving as internal standard. To give an example, about 200 mg to 600 mg of polymer are dissolved in 2.0 mL of TCB, followed by addition of 0.5 mL of $C_6D_6$ and 2 to 3 drops of HMDS.

Following data acquisition, the chemical shifts are referenced to the signal of the internal standard HMDS, which is assigned a value of 2.03 ppm.

The co-monomer content of polyethylene is determined by $^{13}$C-NMR analysis of pellets according to the method described by G.J. Ray et al. in Macromolecules, vol. 10, n° 4, 1977, p. 773-778.

Melting temperatures Tm were determined according to ISO 3146 on a DSC Q2000 instrument by TA Instruments. To erase the thermal history, the samples are second heated to 200 °C and kept at 200 °C for 3 minutes. The reported melting temperatures Tm are then determined with heating and cooling rates of 20 °C/min.

The density is determined according to ISO 1183 at a temperature of 23 °C.

The content of carbon particles, such as carbon nanotubes in percentage by weight (%CNT) in blends, masterbatches or composite materials, can be determined by thermal gravimetric analysis (TGA) according to ISO 11358, using a Mettler Toledo STAR TGA/DSC 1 apparatus. Before the determination of the content of carbon nanotubes in % by weight in blends (%CNT), the carbon content of the carbon nanotubes in % by weight (%C-CNT) was determined as follows: 2 to 3 milligrams of carbon nanotubes were placed into a TGA. The material was heated at a rate of 20 °C/min from 30 °C to 600 °C in nitrogen (100 ml/min). At 600 °C, the gas was switched to air (100 ml/min), and the carbon oxidized, yielding the carbon content of the carbon nanotubes in % by weight (%C-CNT). The %C-CNT value was the average of 3 measurements. For the content of carbon nanotubes % by weight in blends (%CNT), 10 to 20 milligrams of sample were placed into a TGA. The material was heated at a rate of 20 °C/min from 30 °C to 600 °C in nitrogen (100 ml/min). At 600 °C, the gas was switched to air (100 ml/min), and the carbon oxidized, yielding to the carbon content of carbon nanotubes in the sample (%C-sample). The %C-sample value was the average of 3 measurements. The content of carbon nanotubes in % by weight in a sample (%CNT) was then determined by dividing the carbon content of carbon nanotubes in % by weight in samples (%C-sample) by the carbon content of the carbon nanotubes in % by weight (%C-CNT) and multiplying by 100.

$$\%CNT = \%C\text{-sample} / \%C\text{-CNT} * 100$$

The surface resistivity (SR) was measured using a 2410 SourceMeter® apparatus. Conditions which were used were similar to those described in the CEI 60167 and NF C26-215 test methods. The surface resistivity (SR) was measured on 2 mm thick compression molded plate at 200 °C during 12 minutes or on the final device. The resistance measurement, performed using an electrode system, was made of two conductive paint lines using silver ink and an adhesive mask presenting 2 parallel slits 25 mm long, 1 mm wide and 2 mm apart. The samples were conditioned at 23 C/50 % RH for a minimum of 4 hours before running the test. The measure of the resistance (in ohm) was reported to a square area and expressed in ohm/square using the following equation $SR = \frac{R*L}{d}$, wherein SR is the average resistance reported to a square measurement area, conventionally called surface resistivity (expressed in ohm/sq), R is the average of the resistance measurements (ohm), L is the paint line length (cm), d is the distance between the electrode (cm). L = 2.5 cm and d = 0.2 cm and $SR = R * 12.5$. The surface resistivity (SR) value was the average of 3 measurements.

Defect measurement: Defect counts are automatically measured on cast film.

The film is made and analysed on an OCS machine (Optical Control System).

The machine comprises different parts. There is an extruder with a flat 150 mm die followed by two chill rolls and a winder. The film analyser system is made of a halogen lamp and an optical camera mounted opposite to each other. The transparent or translucent film of 25 $\mu$m thickness passes between the lamp and the camera at around 3 m per minute. 5 m$^2$ of the film are analysed.

Additional information on used OCS conditions:

- Imposed extruder temperature: 240 C (in all zones)
- Rolls temperature: 70 C
- Screw speed: 7.5 rpm
- Rolls speed: 5 m/min.

Only defects bigger than 100 $\mu$m are taken into account by the data analyser and acquisition system.

Results are expressed in term of defect number by square meter. They are classified as a function of size. The surface of each defect is measured by the analyser. The size is calculated as the equivalent diameter of each defect calculated as if it was a perfect disk. The total defect area is the sum of all defect areas on the total surface of the analysed film (in ppm).

The following non-limiting examples illustrate the disclosure.

**Examples**

Example 1: Preparation of a masterbatch comprising carbon nanotubes

The carbon nanotubes used were multi-walled carbon nanotubes Nanocyl™ NC 7000, commercially available from Nanocyl. These carbon nanotubes have a surface area of 250-300 m²/g (measured by the BET method), a carbon purity of about 90 % by weight (measured by thermal gravimetric analysis), an average diameter of 9.5 nm and an average length of 1.5 μm (as measured by transmission electron microscopy).

The first polyethylene resin used was polyethylene PE1 with an MI2 of 6 g/10 min as measured according to ISO 1133 (190 °C - 2.16kg), a density of 0.935 g/cm³ (ISO 1183), and a Tm of 123°C according to ISO 3146. PE1 is commercially available from TOTAL® under the tradename M3581.

All masterbatches were blended on Leitztriz ZSE 18 HPe co-rotating twin-screw (screw diameter 18 mm) at an imposed barrel temperature of 120 °C.

The masterbatch M1 was prepared by blending polyethylene PE1 and carbon nanotubes, using a classical twin-screw extrusion process. Carbon nanotubes powder and ground pellets of polyethylene were introduced into the extruder such as to obtain a CNT content of about 10 % by weight based on the total weight of the masterbatch. M1 is a comparative sample.

M2 is an inventive sample using an additive composition according to the disclosure. The additive selected to produce the sample was zinc stearate.

M3 is a comparative sample. The additive selected was Viton Z100 commercially available from the Chemours Company. Viton Z100 is an additive blend (blend 1) corresponding to a blend of ~ 42 wt % of polyethylene glycol and ~52 wt % of fluoropolymer.

M4 is a comparative sample. The additive selected was polyethylene oxide (PEO). The PEO was POLYOX™ WSR-301 (molecular weight 4,000,000 g/mol) commercially available from Dow®.

M5 is a comparative sample. The additive selected was Poly wax 3000 commercially available from Baker Hugues.

M6 is a comparative sample. The additive selected was Ethylene-bis-stearamide (EBS). The EBS (CAS number: 110-30-5) is commercially available from CRODA under the commercial name Crodamide EBS.

M7 is a comparative sample. The additive selected to produce the sample was behenamide. The behenamide (CAS number: 3061-75-4) was commercially available from CRODA under the commercial name Crodamide BR.

M1 and M3 to M7 are comparative examples, M2 is an inventive example. The properties of the polyethylene based masterbatches are provided below in table 1.

Table 1

| PE Masterbatch | M1 | M2 | M3 | M4 | M5 | M6 | M7 |
|---|---|---|---|---|---|---|---|
| PE1 (wt.%) | 90.0 | 89.8 | 89.8 | 88.4 | 88.0 | 88.0 | 88.4 |
| PE1 MI2 (g/10 min) | 6 | 6 | 6 | 6 | 6 | 6 | 6 |
| CNT (wt.%) | 10 | 10 | 10 | 10 | 10 | 10 | 10 |
| Zinc Stearate (wt.%) | - | 0.2 | | | | | |
| Blend 1 (wt.%) | - | - | 0.2 | | | | |
| PEO (wt.%) | - | - | | 1.6 | | | |
| PolyWax 3000 (wt.%) | - | - | | | 2.0 | | |
| EBS (wt.%) | - | - | | | | 2.0 | |
| Behenamide (wt.%) | | | | | | | 1.6 |
| barrel temperature (°C) | 120 | 120 | 120 | 120 | 120 | 120 | 120 |
| HLMI (g/10 min.) | 13 | 13 | 13 | 13 | 13 | 13 | 13 |

Example 2: Production of composite material

The masterbatches were dry blended with a polyethylene resin being the same than the first polyethylene PE1, introduced in a Leistritz ZSE 18 HPe extruder (imposed temperature in the extruder: 180 C in all zones; screw speed of 150 rpm, throughput = 2 kg/h) to form a composite material with a CNT content of 1.0 wt.% based on the total weight of the composite material.

The properties of the composite material are given below in table 2.

Table 2

|  | S1 | S2 | S3 | S4 | S5 | S6 | S7 |
|---|---|---|---|---|---|---|---|
| PE Masterbatch | M1 | M2 | M3 | M4 | M5 | M6 | M7 |
| Masterbatch (wt.%) | 10.0 | 10.0 | 10.0 | 10.0 | 10.0 | 10.0 | 10.0 |
| CNT (wt.%) | 1 | 1 | 1 | 1 | 1 | 1 | 1 |
| Surface resistivity[1], $\rho_S$ (Ohm/sq) | 3.4E+03 | 6E+03 | 6.0E+03 | 9,6E+03 | 5,3E+03 | 8.1E+03 | 5,9E+03 |
| (1) as measured on compression moulded plaque using a 2410 SourceMeter® apparatus and according to the method described, the surface resistivity is done with an accuracy of +/- 1.0 E+01. | | | | | | | |

From the results, it can be seen that there is it possible to achieve similar surface resistivity than with other additives when the masterbatch is blended with a polyethylene similar to the one used to produce the masterbatch.

Example 3: Production of composite material - electrical properties

The masterbatches were dry blended with a second polyethylene resin PE2 to form a composite material with a CNT content of 2.5 wt.% based on the total weight of the composite material. The PE2 is more viscous rendering the possibility to obtain good electrical properties more difficult as demonstrated below in example 5.

The second polyethylene resin used was polyethylene PE2 with an MI5 of 0.7 g/10 min as measured according to ISO 1133 (190 °C - 5kg), a density of 0.949 g/cm$^3$ (ISO 1183), an HLMI of 12 g/10 min as measured according to ISO 1133 (190 °C - 21.6 kg). PE2 is commercially available from TOTAL® under the tradename XRT 70.

All these products were introduced in a Leistritz ZSE 18 HPe extruder (imposed temperature in the extruder: 230 C in all zones; screw speed of 150 rpm, throughput = 2 kg/h)

The properties of the composite material are given below in table 3.

Table 3

|  | S8 | S9 | S10 | S11 | S12 | S13 | S14 |
|---|---|---|---|---|---|---|---|
| PE2 (wt.%) | 75.0 | 75.0 | 75 0 | 75.0 | 75.0 | 75.0 | 75.0 |
| PE2 MI5 (g/10 min) | 0.7 | 0.7 | 0.7 | 0.7 | 0.7 | 0.7 | 0.7 |
| PE Masterbatch | M1 | M2 | M3 | M4 | M5 | M6 | M7 |
| Masterbatch (wt.%) | 25.0 | 25.0 | 25.0 | 25.0 | 25.0 | 25.0 | 25.0 |
| CNT (wt.%) | 2.5 | 2.5 | 2.5 | 2.5 | 2.5 | 2.5 | 2.5 |
| Additive content (wt.%) | - | 0.05 | 0.05 | 0.4 | 0.5 | 0.5 | 0.4 |
| Surface resistivity[1], $\rho_S$ (Ohm/sq) | 5.9E+03 | 1.3E+04 | 1,4E+04 | 9,6E+03 | 3,3E+03 | 4.0E+04 | 1.0E+04 |
| as measured on compression moulded plaque using a 2410 SourceMeter® apparatus and according to the method described the surface resistivity is done with an accuracy of +/- 1.0 E+01 | | | | | | | |

From the results, it can be seen, that the use of the inventive masterbatch leads to articles having a surface resistivity of less than 1E+05, even with a content of CNT as low as 2.5 wt.% and a total content of the additive composition of less than 0.1 wt.% based on the total weight of the composite material.

Example 4: Production of composite material - agglomerate concentration

The masterbatches were dry blended with a second polyethylene resin PE2 (XRT 70) to form a composite material with a CNT content of 0.5 wt.% based in the total weight of the composite material.

The blends were produced on Fairex equipment a single-screw Extruder.

The properties of the composite material are given below, in table 4.

Table 4

| | S15 | S16 | S17 | S18 | S19 | S20 | S21 |
|---|---|---|---|---|---|---|---|
| PE2 (wt.%) | 95.0 | 95.0 | 95.0 | 95.0 | 95.0 | 95.0 | 95.0 |
| PE2 MI5 (g/10 min) | 0.7 | 0.7 | 0.7 | 0.7 | 0.7 | 0.7 | 0.7 |
| PE Masterbatch | M1 | M2 | M3 | M4 | M5 | M6 | M7 |
| CNT (wt.%) | 0.5 | 0.5 | 0.5 | 0.5 | 0.5 | 0.5 | 0.5 |
| Total Defects | 64255 | 41234 | 69339 | 84815 | 76018 | 64540 | 57015 |
| Defects > 1000 ($\mu$m/m2) | 3618 | 2485 | 5423 | 7246 | 6731 | 6892 | 5490 |
| Defect area (ppm) | 3936 | 2717 | 4832 | 6012 | 5491 | 5374 | 4525 |

The results show a significant reduction of the total number of defects in the inventive sample S16 as compared to sample15 produced without an additive. To the contrary, other additive compositions do not show such a reduction. The use of the inventive masterbatch according allows obtaining a better dispersion of the carbon particles as evidenced by the total defect area data and the number of big defects on the film, whereas masterbatches produced with other additive composition lead to an increase of the defects on the films.

Example 5: Influence of the viscosity of the second polyethylene on electrical properties

Extruded blends were prepared by mixing the masterbatch M8 with different polyethylene resins commercially available from TOTAL®, having different melt flow index, under the following procedure.

The carbon nanotubes used were multi-walled carbon nanotubes Nanocyl™ NC 7000, commercially available from Nanocyl. These carbon nanotubes have a surface area of 250-300 $m^2$/g (measured by the BET method), a carbon purity of about 90 % by weight (measured by thermal gravimetric analysis), an average diameter of 9.5 nm and an average length of 1.5 $\mu$m (as measured by transmission electron microscopy).

The second polyethylene resin used was polyethylene PE3 with a melt flow index of 12 g/10mn as measured according to ISO 1133 (190 °C-2.16kg), a density of 0.935 $g/cm^3$ (ISO 1183) and a Tm of 125 °C (according to ISO 3146). PE3 is commercially available from TOTAL® under the tradename M35160.

The masterbatch M8 was prepared by blending polyethylene PE3 and carbon nanotubes, using a classical twin-screw extrusion process. Carbon nanotubes powder and polyethylene were introduced into the extruder such as to obtain a CNT content of about 10 % by weight based on the total weight of the masterbatch. The masterbatch M8 was blended on Leitztriz co-rotating twin-screw extruder with an L/D of 52 (D=27), the barrel temperature was set at 135-140 °C.

The properties of the polyethene-based masterbatch are provided below, in table 5.

Table 5 - Properties of the PE masterbatch

| PE Masterbatch | M8 |
|---|---|
| PE3 (wt.%) | 90 |
| PE3 MI2 (g/10 min) | 12 |
| Additive (wt.%) | - |
| CNT (wt.%) | 10 |
| Screw speed (RPM) | 500 |
| Throughput (kg/h) | 150 |
| barrel temperature (°C) | 90-100 |
| HLMI (g/10 min) | 26.2 |
| Surface resistance[1], $R_S$ (Ohm) | $2.7 \times 10^0$ |

(continued)

| PE Masterbatch | M8 |
|---|---|
| Surface resistivity[(1)], $\rho_S$ (Ohm/sq) | $2.7 \times 10^1$ |
| (1) as measured on compression moulded plaque using a 2410 SourceMeter® apparatus and according to the method describe, the surface resistivity is done with an accuracy of +/- $1.0 \times 10^1$. | |

Production of the composite materials

Dry-blend of 15% of masterbatch-CNT M8 and 85% PE resin were introduced in the feed zone through the hopper and then extruded on twin-screw extruder (screw diameter 18 mm) at a melt temperature of 230 °C (barrel temperature profile from the hopper to die: 220-230-230-230-220 °C) at 80 rpm screw speed and 2 kg/h throughput. No additives were added.

Surface resistivity was measured using a 2410 SourceMeter® apparatus and according to the method described. The results are reported below in table 6.

Table 6

| | S22 | S23 | S24 | S25 |
|---|---|---|---|---|
| Resin | PE2 | PE4 | PE5 | PE6 |
| MI2 of the resin before blending (190 °C/2.16kg) | 0.3 | 1 | 1.2 | 4 |
| MI5 of the resin before blending (190 °C/5kg) | 0.7 | Nd | Nd | Nd |
| HLMI of the resin before blending (190 °C/21.6 kg) | 15 | 26 | 33 | 86 |
| Density of the resin before blending | 947 | 918 | 956 | 940 |
| CNT (wt.%) | 1.5 | 1.5 | 1.5 | 1.5 |
| Surface resistivity (Ohm/square) of the extruded blend | > 1 E+10 | 7 E+04 | 2 E+04 | 2 E+03 |
| Nd = not determined | | | | |

From the results, it can be seen that the melt flow index of the polyethylene resin influences the possibility to obtain surface resistivity of below $1 \times 10^6$ Ohm/square.

PE2 is commercially available from TOTAL® under the tradename XRT 70. PE4 is commercially available from TOTAL® under the tradename LL1810. PE5 is commercially available from TOTAL® under the tradename M5510 EP. PE6 is commercially available from TOTAL® under the tradename M4040.

**Claims**

1. Masterbatch for use in a process of preparing a composite material, the masterbatch comprising a blend of

  - from 71.0 to 95.0 wt.% of a first polyethylene resin based on the total weight of said masterbatch, wherein the first polyethylene resin has a melt flow index MI2 ranging from 1 to 500 g/10 min as determined according to ISO 1133 at 190 °C under a load of 2.16 kg; and
  - at least 5.0 wt.% of carbon particles based on the total weight of said masterbatch as determined according to ISO 11358 selected from nanographene, carbon nanotubes or any combination thereof;

  **characterized in that** the masterbatch further comprises from 0.1 to 4.5 wt.% of an additive composition, wherein the additive composition comprises at least 80 wt.% of one or more metallic stearates based on the total weight of the additive composition.

2. Masterbatch according to claim 1, **characterized in that** the metallic stearate or at least one metallic stearate is selected from zinc stearate, calcium stearate, magnesium stearate and any mixture thereof, preferably the metallic stearate or at least one metallic stearate is zinc stearate.

**3.** Masterbatch according to any one of claim 1 to 2, **characterized in that** the masterbatch has an HLMI of at least 5 g/10 min and at most 500 g/10 min as determined according to ISO 1133 at 190 °C under a load of 21.6 kg; preferably of at least 5 g/10 min and of at most 100 g/10 min.

**4.** Masterbatch according to any one of claim 1 to 3, **characterized in that** the carbon particles are carbon nanotubes, with preference

- the masterbatch comprises from 5.0 wt.% to 25.0 wt.% of carbon nanotubes based on the total weight of said masterbatch as determined according to ISO 11358; and/or
- at least 80 wt.% of the carbon nanotubes have an average length of 1.2 $\mu$m or more; preferably, all the carbon nanotubes have an average length of 1.2 $\mu$m or more; and/or
- the first polyethylene resin is selected from a virgin polyethylene resin, a polyethylene post-consumer resin and a blend of a virgin polyethylene resin and a polyethylene post-consumer resin.

**5.** Masterbatch according to any one of claims 1 to 4, **characterized in that** the masterbatch comprises at most 1.5 wt.% of the additive composition based on the total weight of said masterbatch, preferably at most 1.0wt.%, more preferably at most 0.5 wt.%.

**6.** Masterbatch according to any one of claims 1 to 5, **characterized in that** the first polyethylene resin has a melt flow index MI2 ranging from 1 to 250 g/10 min as determined according to ISO 1133 at 190 °C under a load of 2.16 kg, preferably from 2 to 150 g/10 min more preferably from 1 to 10 g/10 min.

**7.** Use of an additive composition in a process to produce a masterbatch according to any one of claims 1 to 6, wherein the masterbatch comprises at least 5 wt.% of carbon particles, and a first polyethylene resin having a melt flow index MI2 ranging from 1 to 500 g/10 min as determined according to ISO 1133 at 190 °C under a load of 2.16 kg, preferably ranging from 1 to 250 g/10 min; wherein the additive composition comprises at least 80 wt.% of a metallic stearate based on the total weight of said additive composition; and wherein the additive composition content is ranging from 0.1 to 4.5 wt.% based on the total weight of said masterbatch.

**8.** The use according to claim 7, **characterized in that** the first polyethylene resin has a melting temperature Tm1 as measured according to ISO11357-3, and **in that** the process comprises a step of blending said carbon particles, said additive composition and said first polyethylene resin by extrusion in an extruder comprising a transport zone and a melting zone maintained at a temperature comprised between Tm1 + 1 °C and Tm1 + 50 °C, preferably between Tm1 + 5°C and Tm1 + 30 °C.

**9.** Composite material **characterized in that** it comprises:

- from 50 to 99 wt.% of a polyethylene blend based on the total weight of said composite material, wherein the polyethylene blend has a high load melt flow index HLMI of at least 1 g/10 min and at most 50 g/10 min as determined according to ISO 1133 at 190 °C under a load of 21.6 kg;
- from 0.2 to 10 wt.% of carbon particles based on the total weight of said composite material as determined according to ISO 11358 selected from nanographene, carbon nanotubes or any combination thereof; and
- 0.01 to 0.15 wt.% of an additive composition comprising at least 80 wt.% of one or more metallic stearates based on the total weight of said additive composition; preferably at least 90 wt.%;

and **in that** the composite material has a surface resistivity of at most 1 E+06 ohm/sq as determined using a 2410 SourceMeter® apparatus and according to the method given in the description; with preference, the composite material comprises from 0.2 to 3.5 of carbon particles and/or the second polyethylene resin is selected from a virgin polyethylene resin, a polyethylene post-consumer resin and a blend of a virgin polyethylene resin and a polyethylene post-consumer resin..

**10.** The composite material according to claim 9, **characterized in that** the polyethylene blend is the blend of a first polyethylene resin having a melt flow index MI2 ranging from 1 to 500 g/10 min as determined according to ISO 1133 at 190 °C under a load of 2.16 kg and of a second polyethylene resin having a melt flow index MI2 of less than 100 g/10 min as determined according to ISO 1133 at 190 °C under a load of 2.16 kg, with preference the first polyethylene resin is the resin originated from the masterbatch according to any one of claims 1 to 6 and/or the second polyethylene is having a melt flow index of less than 10 g/10 min.

**11.** The composite material according to claim 9 or 10, **characterized in that** the carbon particles are carbon nanotubes and **in that** the content of carbon nanotubes is at most 3.0 wt.% based on the total weight of the composite material as determined according to ISO 11358, preferably at most 2.5 wt.%.

**12.** Conductive article **characterized in that** it is made from or comprises the composite material according to any one of claims 9 to 11; with preference, the article is selected from pipes, geomembranes, containers, electrical packaging, thermoformed articles, heating panels or films; and/or the conductive article is produced by extrusion, thermoforming, blow moulding or injection moulding.

**13.** The conductive article according to claims 12, **characterized in that** the article is a film and has a total defect area of less than 3500 ppm as determined by an optical control system (OCS).

**14.** A process to produce a conductive article as defined according to any one of claims 10 to 13, the conductive article being produced from a composite material wherein the process comprises the following steps

(a) providing a masterbatch according to any one of claims 1 to 6;
(b) providing a second polyethylene resin having a melt flow index MI2 of less than 100 g/10 min as determined according to ISO 1133 at 190 °C under a load of 2.16 kg, preferably of less than 50 g/10 min, more preferably of less than 10 g/10 min;
(c) blending said masterbatch and said second polyethylene resin by extrusion in an extruder comprising a transport zone and a melting zone maintained at a temperature greater than 180 °C,
(d) forming an article by extrusion, thermoforming, blow moulding or injection moulding.

**15.** The process of claim 14, **characterized in that** the second polyethylene resin having a melt flow index MI2 of less than 0.45 g/10 min; or in the range of 0.7 to 1.5 g/10 min; or in the range of 0.7 to 2.5 g/10 min; or in the range of 0.7 to 4.0 g/10 min; or in the range of 6.0 to 9.0 g/10 min as determined according to ISO 1133 at 190 °C under a load of 2.16 kg.

Europäisches
Patentamt

European
Patent Office

Office européen
des brevets

# EUROPEAN SEARCH REPORT

Application Number

EP 20 17 5567

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/142544 A1 (TOTAL RES & TECHNOLOGY FELUY [BE]) 15 September 2016 (2016-09-15) <br> * claims 1-5,10-14 * <br> * page 2, line 25 - page 3, line 10 * <br> * page 4, line 1 - line 23 * <br> * page 13, line 22 - line 28 * <br> * page 17, line 5 - line 13 * <br> * page 22, line 16 - line 25 * <br> * page 25 - page 27; examples 1,3 * <br> ----- | 1-15 | INV. <br> B82Y30/00 <br> C08J3/22 <br> C08K5/098 <br> C08L23/06 |
| X | WO 2018/130639 A1 (TOTAL RES & TECHNOLOGY FELUY [BE]) 19 July 2018 (2018-07-19) <br> * claims 1-15 * <br> * page 2, line 17 - line 20 * <br> * page 6, line 26 - page 8, line 25 * <br> * page 20, line 17 - line 22 * <br> ----- | 1-15 | |
| A | US 2012/241686 A1 (BASTIAENS JOS [BE] ET AL) 27 September 2012 (2012-09-27) <br> * the whole document * <br> ----- | 1-15 | |
| | | | **TECHNICAL FIELDS SEARCHED (IPC)** <br><br> C08J <br> C08K <br> B82Y <br> C08L |

The present search report has been drawn up for all claims

| Place of search | Date of completion of the search | Examiner |
|---|---|---|
| Munich | 14 September 2020 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 17 5567

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2020

| Patent document cited in search report | | Publication date | Patent family member(s) | | Publication date |
|---|---|---|---|---|---|
| WO 2016142544 | A1 | 15-09-2016 | BR | 112017019417 A2 | 02-05-2018 |
| | | | CA | 2976850 A1 | 15-09-2016 |
| | | | CN | 107428952 A | 01-12-2017 |
| | | | EP | 3268416 A1 | 17-01-2018 |
| | | | JP | 2018507940 A | 22-03-2018 |
| | | | KR | 20170129178 A | 24-11-2017 |
| | | | PH | 12017501600 A1 | 12-02-2018 |
| | | | SG | 11201707175X A | 30-10-2017 |
| | | | US | 2018044485 A1 | 15-02-2018 |
| | | | US | 2020148840 A1 | 14-05-2020 |
| | | | WO | 2016142544 A1 | 15-09-2016 |
| WO 2018130639 | A1 | 19-07-2018 | CN | 110177836 A | 27-08-2019 |
| | | | EP | 3568435 A1 | 20-11-2019 |
| | | | TW | 201840688 A | 16-11-2018 |
| | | | US | 2019367713 A1 | 05-12-2019 |
| | | | WO | 2018130639 A1 | 19-07-2018 |
| US 2012241686 | A1 | 27-09-2012 | CN | 103415554 A | 27-11-2013 |
| | | | EP | 2688941 A1 | 29-01-2014 |
| | | | JP | 5597318 B2 | 01-10-2014 |
| | | | JP | 2014511908 A | 19-05-2014 |
| | | | KR | 20140024337 A | 28-02-2014 |
| | | | US | 2012241686 A1 | 27-09-2012 |
| | | | WO | 2012127357 A1 | 27-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6930071 B
- US 6864207 B
- WO 2012001160 A2
- EP 1189781 A
- US 20080318015 A

**Non-patent literature cited in the description**

- Plastics Additives Handbook. Hanser Publishers, 2001
- *CHEMICAL ABSTRACTS,* 128961-68-2
- *CHEMICAL ABSTRACTS,* 68411-46-1
- **G.J. RAY et al.** *Macromolecules,* 1977, vol. 10 (4), 773-778